# EUROPÄISCHE PATENTANMELDUNG

(11) **EP 4 852 298 A1**
(43) Veröffentlichungstag der Anmeldung: **09.12.2026**
(21) Anmeldenummer: 25180726.9
(22) Anmeldetag: 04.06.2025
(51) Int. Cl.: H02M 7/483, H02M 1/00, F27B 3/08

(54) **SICHERSTELLUNG DER EINHALTUNG VON GRENZWERTEN FÜR UMRICHTERARME EINES MULTILEVELUMRICHTERS**

(71) Anmelder: Primetals Technologies Germany GmbH, 91058 Erlangen (DE)
(72) Erfinder: Dinkel, Daniel, 91058 Erlangen (DE); Weinzierl, Klaus, 90480 Nürnberg (DE)
(74) Vertreter: Metals@Linz

(57) **Zusammenfassung**

Verfahren zum Betrieb eines Multilevelumrichters (4), der wenigstens einen Teilumrichter (26, 27) mit einer Mehrzahl von Umrichterarmen (9) aufweist, die Gleichspannungsanschlüsse des Teilumrichters (26, 27) mit mehreren, insbesondere drei, jeweils einer Phase zugeordneten Wechselspannungsanschlüssen des Teilumrichters (26, 27) verbinden und jeweils mehrere Submodule (10) mit einem Kondensator (13) und ansteuerbaren Schaltern (14) aufweisen, wobei eine Transformation derart bereitgestellt wird, dass bei Anwendung auf einen Satz von Armspannungen und/oder einen Satz von Armströmen als Armgrößen folgende Arten von Komponentengrößen erhalten werden:
- eine Gleichstromkomponente, die auf Gleichstromanteile und/oder Gleichspannungsanteile in dem Teilumrichter (26, 27) bezogen ist,
- wenigstens eine Wechselstromkomponente, die auf Wechselstromanteile und/oder Wechselspannungsanteile in dem Teilumrichter (26, 27) bezogen ist,
- eine Common-Mode-Komponente, die auf gemeinsame Ströme und/oder Spannungen in den Armen (10) bezogen ist, und
- wenigstens eine Kreisstromkomponente, die auf nach außen nicht sichtbare Kreisströme und/oder deren Spannungen innerhalb des Teilumrichters (26, 27) bezogen ist,

wobei in einer zyklisch mit einer Zykluszeit (TZ) wiederholten Abfolge von Schritten einzustellende Armströme für die Arme (10) ermittelt werden und ein Schritt der Abfolge die Bereitstellung von Sollwerten für wenigstens einen Teil der Strom-Komponentengrößen und/oder die Armströme durch wenigstens eine Ermittlungseinheit, die wenigstens eine Armenergieregelung durchführt, ist
dadurch gekennzeichnet, dass die Abfolge von Schritten zur Sicherstellung einer Einhaltung eines maximalen Armstroms und eines minimalen Armstroms für jeden Arm (10) ferner eine Ermittlung eines minimalen Korrekturvektors mit additiven Korrekturwerten wenigstens für die Strom-Wechselstromkomponenten und die Strom-Kreisstromkomponenten in einem Optimierungsvorgang umfasst und eine Anwendung des ermittelten Korrekturvektors zur Anpassung der Sollwerte umfasst.

## Beschreibung

### Gebiet der Technik

Die Erfindung betrifft ein computerimplementiertes Verfahren zum Betrieb eines Multilevelumrichters, der wenigstens einen Teilumrichter mit einer Mehrzahl von Umrichterarmen aufweist, die Gleichspannungsanschlüsse des Teilumrichters mit mehreren, insbesondere drei, jeweils einer Phase zugeordneten Wechselspannungsanschlüssen des Teilumrichters verbinden und jeweils mehrere Submodule mit einem Kondensator und ansteuerbaren Schaltern aufweisen, wobei eine Transformation derart bereitgestellt wird, dass bei Anwendung auf einen Satz von Armspannungen und/oder einen Satz von Armströmen als Armgrößen folgende Arten von Komponentengrößen erhalten werden:
- eine Gleichstromkomponente, die auf Gleichstromanteile und/oder Gleichspannungsanteile in dem Teilumrichter bezogen ist,
- wenigstens eine Wechselstromkomponente, die auf Wechselstromanteile und/oder Wechselspannungsanteile in dem Teilumrichter bezogen ist,
- eine Common-Mode-Komponente, die auf gemeinsame Ströme und/oder Spannungen in den Armen bezogen ist, und
- wenigstens eine Kreisstromkomponente, die auf nach außen nicht sichtbare

Kreisströme und/oder deren Spannungen innerhalb des Teilumrichters bezogen ist, wobei in einer zyklisch mit einer Zykluszeit wiederholten Abfolge von Schritten einzustellende Armströme für die Arme ermittelt werden und ein Schritt der Abfolge die Bereitstellung von Sollwerten für wenigstens einen Teil der Strom-Komponentengrößen und/oder die Armströme durch wenigstens eine Ermittlungseinheit, die wenigstens eine Armenergieregelung durchführt, ist. Daneben betrifft die Erfindung eine Steuereinrichtung, ein Computerprogramm, einen elektronisch lesbaren Datenträger und einen Multilevelumrichter.

### Stand der Technik

Modulare Multilevelumrichter (modular multilevel converter, MMC) haben sich im Stand der Technik als favorisierte Topologie für Hochspannungs- und Hochleistungsanwendungen etabliert. Die vorteilhaften Eigenschaften eines MMC, wie die Redundanz und Ausfallsicherheit, der hohe Wirkungsgrad, die industrielle Skalierbarkeit sowie die Fähigkeit zur elektronischen Beherrschung von Fehlern sind beispielsweise für den Einsatz in der Hochspannungs-Gleichstrom-Übertragung, beispielsweise in Stromnetzen, geeignet. Ferner wurden auch Anwendungen für schwer prädizierbare Lasten, beispielsweise Antriebe oder Elektro-Lichtbogenöfen, vorgeschlagen.

In einem Elektrostahlwerk wird Schrott mittels eines Lichtbogenofens geschmolzen. Dazu werden in der Regel drei Elektroden in einen mit Schrott gefüllten Behälter getaucht und sodann zwischen dem Schrott und den Elektroden Lichtbögen generiert, so dass der Schrott aufgeheizt und geschmolzen wird. Die an die Elektroden angelegten Spannungen liegen typischerweise im Bereich von mehreren 100 V bis etwas über 1 kV, manchmal bis zu 2 kV. Die Leistung eines industriellen Lichtbogenofens liegt oftmals zwischen 50 MW und 300 MW.

Durch den ständig flackernden Lichtbogen kommt es zu Spannungsschwankungen und - wenn keine Gegenmaßnahmen ergriffen werden - zu erheblichen Netzrückwirkungen. Historisch ist es bekannt, dem Lichtbogenofen Kompensatoren parallel zu schalten, beispielsweise einen sogenannten SVC (static VAR compensator) oder einen sogenannten STATCOM (static compensator) oder passive Filter. Derartige Kompensatoren sind groß, schwer und teuer. Weiterhin erzeugen sie Verlustleistung und beeinflussen auch andere an das Versorgungsnetz angeschlossene Einheiten.

Aus EP 2 329 684 B1 ist bekannt, den Lichtbogenofen über einen Multilevelumrichter (auch: Multilevelkoverter) zu speisen, der eingangsseitig des Ofentransformators angeordnet ist. Mit einem derartigen Umrichter ist es möglich, zusätzlich zu einer genauen Einstellung der Blindleistung auf der Eingangsseite auch die vom Elektrolichtbogenofen aufgenommene Wirkleistung zu regeln. In der genannten EP-Schrift ist ausgeführt, dass über die symmetrische Belastung der Phasen des Versorgungsnetzes mit Wirkleistung hinausgehende Rückwirkungen der Phasen des Lichtbogenofens auf das Versorgungsnetz minimiert werden. Die genaue Art und Weise der Ansteuerung des Multilevelumrichters ist der genannten EP-Schrift nicht zu entnehmen. In der nachveröffentlichen europäischen Patentanmeldung EP 23218588.4 wurde eine Konkretisierung der Vorgehensweise in EP 2 329 684 B1 vorgeschlagen, bei der die ausgangsseitige Phasenspannung im komplexen Raum in Anteile parallel und senkrecht zum Strom-Raumzeiger aufgeteilt werden.

Allgemein gesprochen umfasst ein Multilevelumrichter für drei Phasen wenigstens einen Teilumrichter mit einer Mehrzahl von Umrichterarmen (Umrichterzweigen), die Gleichspannungsanschlüsse des Teilumrichters mit drei jeweils einer Phase zugeordneten Wechselspannungsanschlüssen des Teilumrichters verbinden und jeweils mehrere Submodule mit einem Speicherkondensator und ansteuerbaren (Halbleiter-)Schaltern aufweisen. Die Submodule können beispielsweise Halbbrücken oder Vollbrücken umfassen. Eine Halbbrücke kann dabei einen ersten Schalter schließen und einen zweiten Schalter öffnen, um die Spannung zwischen den beiden nach außen gehenden Kontakten des Submoduls auf Null zu setzen. In der umgekehrten Schaltstellung liegt zwischen den beiden Kontakten die positive Kondensatorspannung an. Bei der Vollbrücke kann je nach Schalterstellung an den nach außen gehenden Kontakten des Submoduls entweder die positive Kondensatorspannung, die negative Kondensatorspannung oder Null auftreten.

Beim Lichtbogenofen können beispielsweise zwei Teilumrichter verwendet werden, deren Gleichspannungsanschlüsse zu einem Spannungszwischenkreis verbunden sind, wobei die Wechselspannungsanschlüsse mit dem Netz bzw. über den Ofentransformator mit dem Lichtbogenofen zu verbinden sind. In anderen Anwendungen, beispielsweise dem Betrieb von Antriebsmitteln aus einer Gleichspannungsquelle, kann ein Multilevelumrichter auch einen einzigen Teilumrichter umfassen.

Bei der Regelung des Multilevelumrichters ist es die Aufgabe, eine stabile Regelung der Kondensatorladungen bzw. Kondensatorspannungen bzw. Energieinhalte der Kondensatoren aufzubauen. Dabei gibt es bei jedem Umrichterarm (im Folgenden auch kurz "Arm") eine unterlagerte Regelung, die im Falle einer gewünschten Armspannungserhöhung darüber entscheidet, welcher Kondensator zugeschaltet wird und im Falle einer gewünschten Armspannungserniedrigung entscheidet, welcher Kondensator weggeschaltet wird. Dazu werden beispielsweise für jeden Arm die Kondensatorspannungen erfasst, der Größe nach sortiert, die Richtung des Stromes erfasst, und wenn der Strom positiv ist, wird im Falle einer Zuschaltung derjenige Kondensator mit der niedrigsten Spannung, Ladung bzw. Energie zugeschaltet, damit er geladen wird. Im Falle einer Abschaltung wird derjenige Kondensator mit der höchsten Spannung, Ladung bzw. Energie weggeschaltet, damit er nicht weiter geladen wird. Bei negativem Strom ist es umgekehrt. Analog wird auch bei einer Vollbrücke verfahren. Gewünschte Armspannungen sind letztlich das Ergebnis der oben bereits beispielhaft beschriebenen Leistungsregelung, die auf den Bedarf der Last und die Vermeidung von Flicker abzielt.

Allerdings muss zusätzlich garantiert werden, dass die Summe aller Kondensatorenergien eines Armes nicht einen unzulässigen Wert annimmt. Für die Energie eines Armes (Armenergie) gibt es einen oberen Schwellwert (Energie-Maximalwert), der sicherstellt, dass keiner der Kondensatoren auf einer unzulässig hohen Spannung arbeitet, der zur Schädigung bzw. Zerstörung des Kondensators führen kann, und einen unteren Schwellwert (Energie-Minimalwert), bei dessen Unterschreitung selbst die Einschaltung aller Kondensatoren eine zu kleine Armspannung erzeugt, die nicht mehr ausreichend ist für die übergeordnete Regelung. Ist der Multilevelumrichter beispielsweise an einem Netz angeschlossen, muss wenigstens die Netzspannung gestellt werden können. Andernfalls würden sich unzulässig hohe Ladeströme ergeben, die nicht mehr heruntergeregelt werden können.

Die komplizierte Aufgabe, die Armenergien zwischen diesen beiden Schwellwerten zu halten, wird auch als Armenergieregelung bezeichnet. Dabei wird üblicherweise auf einen Sollwert geregelt, der beispielsweise mittig zwischen dem Energie-Maximalwert und dem Energie-Minimalwert liegen kann. Dennoch kann es zu Schwankungen um diesen Sollwert kommen. Ist die Armenergieregelung unzureichend, können erhebliche Einschränkungen im Betrieb resultieren. Dagegen kann es eine geschickte Armregelung sogar erlauben, Gleichstromanteile bzw.

Gleichspannungsanteile an den Wechselspannungsanschlüssen bereitzustellen. Bei der Armenergieregelung werden hierbei meist einzustellende Ströme ausgegeben.

Grundsätzlich kann man die dynamischen Ströme und Spannungen in einem Teilumrichter in mehrere interpretierbare Komponentengrößen aufteilen. Hierbei existieren neben einer Common-Mode-Komponente (CM-Komponente) auf den Wechselstrom und den Gleichstrom bezogene Komponenten (AC- bzw. DC-Komponente) sowie Kreisstromkomponenten, die Kreisströme und deren Spannungen in dem Teilumrichter beschreiben, die nach außen hin nicht in Erscheinung treten. Diese Kreisströme werden häufig verwendet, um Freiheitsgrade zur Armenergieregelung bereitzustellen.

Im Stand der Technik bekannte Armenergieregelungsverfahren zielen darauf ab, prädiktiv den zukünftigen Verlauf insbesondere der Wechselstrom- und Wechselspannungsanteile sowie der netzseitigen Größen in dem Teilumrichter vorherzusagen, beispielsweise als periodischer Verlauf. Bei einem solchen periodischen Verlauf kann ausgerechnet werden, welche ebenfalls harmonischen Kreisströme erforderlich sind, damit die Armenergien nach einer Periode wieder denselben Wert aufweisen.

In der Dissertation von Daniel Dinkel, "Direkte Multivariablenregelung von Modularen Multilevel Umrichtern", Neubiberg: Universitätsbibliothek der Universität der Bundeswehr München, 2022, wird ein Ansatz beschrieben, in dem die Armenergieregelung auf einer zu optimierenden Zielfunktion basiert, die zukünftige Kreisströme liefert. Dabei kann zum einen eine modellprädiktive Methode verwendet werden, zum anderen aber auch mit Momentanleistungswerten gearbeitet werden, um Kreisströme in einem einzigen Energieregler zu ermitteln. Auch eine Armleistungsregelung ist möglich. Zur Umsetzung der ermittelten Kreisströme und sonstigen Ergebnisse der Leistungs- und Energieregelung wird eine sogenannte Multivariablensteuerung (MVC) vorgeschlagen. Konkret anzusteuernde Schalter zur möglichst genauen Herstellung ermittelter Komponentengrößen können beispielsweise über Look-Up-Tabellen bereitgestellt werden.

In der Praxis hat sich gezeigt, dass die Armenergieregelung und andere Steuerkomponenten, die Beiträge zu einzustellenden Armströmen liefern, nicht in jeder Situation in der Lage sind, eine Verletzung von Schwellwerten, beispielsweise für die Armströme, insbesondere aber für die Armenergien, zu verhindern. Beispielsweise kann es also bei der Armenergieregelung zu einer Regelabweichung kommen, die zu einer Überschreitung des unteren oder oberen Schwellwerts führen kann. Dann wird aus Sicherheitsgründen üblicherweise der Umrichter deaktiviert. In vielen Anwendungsfällen ist dies jedoch problematisch. Beispielsweise würden bei Vorliegen eines Elektro-Lichtbogenofens als Last bei Abschalten des Multilevelumrichters die Lichtbögen abreißen, sodass der Schmelzprozess insgesamt unterbrochen werden muss.

US 2024/0305202 A1 offenbart ein Leistungsversorgungssystem für einen Lichtbogenofen. Das Leistungsversorgungssystem umfasst einen Umrichter und einen Mehrphasentransformator, und ferner eine erste Trenneinrichtung, die den Eingang des Umrichters mit dem Primärstromkreis verbindet, eine zweite Trenneinrichtung, die den Ausgang des Umrichters mit dem Primärstromkreis verbindet, und eine Steuerschaltung, die dazu konfiguriert ist, den Umrichter zu steuern, um die Elektroden zu versorgen und den Strom und die Spannung zu stabilisieren, die vom Netz geliefert werden, um Reaktionen im Netz zu verringern, wenn die erste Trenneinrichtung geöffnet und die zweite Trenneinrichtung geschlossen ist, und den Umrichter zu steuern, um den Strom und die Spannung zu stabilisieren, die vom Netz geliefert werden, um Reaktionen im Netz zu verringern, wenn die erste Trenneinrichtung geschlossen und die zweite Trenneinrichtung geöffnet ist.

Das in US 2022/0271681 A1 beschriebene Leistungsversorgungssystem für einen Lichtbogenofen umfasst einen an ein Stromnetz anschließbaren Wechselstromeingang und einen Wechselstromausgang zur Versorgung mindestens einer Leistungselektrode des Lichtbogenofens. Das Stromversorgungssystem umfasst außerdem eine Konverterschaltung, die zwischen dem Wechselstromeingang und dem Wechselstromausgang angeschlossen ist. Die Wandlerschaltung umfasst mindestens eine Wandlerzelle mit einem Kondensator und Halbleiterschaltern zum Reihenschalten des Kondensators zwischen einem Schaltungseingang und einem Schaltungsausgang der Wandlerschaltung.

Der Erfindung liegt die Aufgabe zu Grunde, eine demgegenüber verbesserte Steuerung von Multilevelumrichtern anzugeben, die insbesondere trotz voller Ausnutzung von Betriebsgrenzen eine Abschaltung möglichst verlässlich verhindert.

### Zusammenfassung der Erfindung

Zur Lösung dieser Aufgabe sind erfindungsgemäß ein computerimplementiertes Verfahren mit den Merkmalen des Anspruchs 1, eine Steuereinrichtung mit den Merkmalen des Anspruch 9, ein Computerprogramm mit den Merkmalen des Anspruchs 10, ein elektronisch lesbarer Datenträger mit den Merkmalen des Anspruchs 11 und ein Multilevelumrichter mit den Merkmalen des Anspruch 12 vorgesehen. Vorteilhafte Weiterbildungen ergeben sich aus den Unteransprüchen.

Bei einem Verfahren der eingangs genannten Art ist erfindungsgemäß vorgesehen, dass die Abfolge von Schritten zur Sicherstellung einer Einhaltung eines maximalen Armstroms und eines minimalen Armstroms für jeden Arm ferner eine Ermittlung eines minimalen Korrekturvektors mit additiven Korrekturwerten wenigstens für die Strom-Wechselstromkomponenten und die Strom-Kreisstromkomponenten in einem Optimierungsvorgang umfasst und eine Anwendung des ermittelten Korrekturvektors zur Anpassung der Sollwerte umfasst.

Dabei wird im Folgenden von dem gängigen Fall dreier Phasen ausgegangen. In diesem Fall liegen zwei Wechselstromkomponenten und zwei Kreisstromkomponenten vor, wie beispielsweise in der bereits genannten Dissertation von Daniel Dinkel und im Folgenden näher erläutert wird. Für die Komponentenarten AC-Komponente und CC-Komponente gibt es also jeweils zwei konkrete Komponenten, also eine erste AC-Komponente und CC-Komponente sowie eine zweite AC-Komponente und CC-Komponente. Die Erläuterung in Bezug auf drei Phasen schließt nicht die Anwendung des hier beschriebenen Konzepts auf Systeme mit zwei oder mehr als drei Phasen aus.

Die Transformation kann bevorzugt gleichartig sowohl auf einen Satz von Armströmen als auch auf einen Satz von Armspannungen angewendet werden und die entsprechenden Strom-Komponentengrößen bzw. Spannungs-Komponentengrößen liefern. Werden die Armgrößen beispielsweise als Vektor geschrieben, kann die lineare Transformation als eine Matrix geschrieben werden. Diese Matrix bzw. allgemein Transformation kann auch auf Armgrößen angewendet werden, die die aktuell in den jeweiligen Umrichterarmen (kurz: Armen) gespeicherte Armenergie beschreiben. Die Benennung der Komponenten erfolgt dabei der Einfachheit halber und bekannten Konventionen folgend nach den Strömen, obwohl - beispielsweise bei Transformation von Armspannungen - selbstverständlich auch ein Bezug auf Spannungen gegeben ist; bei manchen Armgrößen ggf. sogar auf beides. Dabei wird für konkrete Komponentengrößen nun die Ausgangs-Armgröße in Verbindung mit der Art der Komponente als Bezeichnung gewählt, also beispielsweise "Energie-Gleichstromkomponente" (Kurz Energie-DC-Komponente) oder "zweite Spannungs-Wechselstromkomponente" (kurz Spannungs-AC-Komponente). Bevorzugt kann die Transformation eine orthogonale, insbesondere orthonormale, Transformation sein, so dass Änderungen an Komponentengrößen unabhängig voneinander

Hierbei sind die durch Anwendung der Transformation auf die Armströme erhaltenen Strom-Komponentengrößen hinsichtlich ihrer Wirkung auf die einzelnen Arme aufgrund der Transformation, die sich beispielsweise bei vektorieller Schreibweise der Armströme als, insbesondere orthogonale, Transformationsmatrix schreiben lässt, klar interpretierbar, insbesondere, was die Kreisströme angeht.

Der Bezug der Komponentengrößen kann allgemein auch so formuliert werden, dass
- bei der Common-Mode-Komponente sich die Größen aller sogenannten oberen Arme (positive Arme; p-Arme) und aller unteren Arme (negative Arme, n-Arme) jeweils gleichen, wobei die Größen der unteren Arme das negative der positiven Arme sind;
- die Wechselstromkomponente relevant für die Darstellung der Wechselspannungen und Wechselströme auf der Wechselspannungsseite (also an den Wechselspannungsanschlüssen) ist,
- die Gleichstrom-Komponente relevant für die Ströme und Spannungen auf der Gleichspannungsseite (also an den Gleichspannungsanschlüssen) ist, und
- die wenigstens eine Kreisstrom-Komponente für Kreisströme bzw. deren Spannungen relevant ist.

Bei nicht angeschlossenem Sternpunkt ist die Strom-Common-Mode-Komponente immer Null.

Eine beispielhafte orthonormale, bevorzugte Transformation sei im Folgenden kurz hergeleitet. Schreibt man, im folgenden beispielhaft für die Armspannungen, für die Spannungen der positiven Arme ${U}_{p} = \left[\begin{matrix}{u}_{p 1} \\ {u}_{p 2} \\ {u}_{p 3}\end{matrix}\right]$ (1) und für die Spannungen der negativen Arme ${U}_{n} = \left[\begin{matrix}{u}_{n 1} \\ {u}_{n 2} \\ {u}_{n 3}\end{matrix}\right] ,$ (2) so kann man den Satz von Armspannungen als Vektor $U = \left[\begin{matrix}{U}_{p} \\ {U}_{n}\end{matrix}\right]$ (3) schreiben, und entsprechend für andere Armgrößen, beispielsweise Armströme. Eine mögliche orthonormale Transformation ***T*** in Matrixschreibweise ist dann beispielsweise, wiederum für die Spannungen aufgeschrieben, gegeben durch ${U}^{˜} = \left[\begin{matrix}{U}_{cm} \\ {U}_{ac 1} \\ {U}_{ac 2} \\ {U}_{dc} \\ {U}_{cc 1} \\ {U}_{cc 2}\end{matrix}\right] = \frac{1}{2 \sqrt{3}} \left[\begin{matrix}- \sqrt{2} & - \sqrt{2} & - \sqrt{2} & \sqrt{2} & \sqrt{2} & \sqrt{2} \\ - \sqrt{3} & 0 & \sqrt{3} & \sqrt{3} & 0 & - \sqrt{3} \\ 1 & - 2 & 1 & - 1 & 2 & - 1 \\ \sqrt{2} & \sqrt{2} & \sqrt{2} & \sqrt{2} & \sqrt{2} & \sqrt{2} \\ - \sqrt{3} & 0 & \sqrt{3} & - \sqrt{3} & 0 & \sqrt{3} \\ 1 & - 2 & 1 & 1 & - 2 & 1\end{matrix}\right] U = TU .$ (4)

Analog können die Armströme ***I*** und andere Armgrößen umgerechnet werden. Die Matrix ***T*** ist dabei orthonormal, d. h., alle Zeilen-bzw. Spaltenvektoren stehen aufeinander senkrecht und haben die Länge Eins. Die Inverse erhält man durch einfaches Transponieren. Dies ermöglicht eine einfache Rücktransformation in die Armgrößen. Aufgrund der Orthonormalität ist auch Leistungsinvarianz gegeben, $P = {U}^{T} I = {U}^{T} {T}^{- 1} TI = {U}^{T} {T}^{T} TI = {\left(TU\right)}^{T} TI ,$ (5) d. h., die dem Teilumrichter zugeführte Leistung kann sowohl für Armgrößen als auch für Komponentengrößen bilanziert werden.

Bei drei Phasen ist aufgrund der zweidimensionalen Wechselstrom-Komponenten und Kreisstrom-Komponenten auch jede beliebige andere orthonormale Aufteilung möglich, sodass es eine Vielzahl von orthonormalen Matrizen ***T*** gibt, die herangezogen werden können. Werden orthogonale Transformationen verwendet, die nicht orthonormal sind, können Skalierungsfaktoren auftreten, die berücksichtigt werden müssen.

Erfindungsgemäß wird weiterhin davon ausgegangen, dass bei einer Überschreitung eines maximalen Armstroms bzw. einer Unterschreitung eines minimalen Armstroms eine Abschaltung des Multilevelumrichters erfolgen muss. Es wird allerdings vorgeschlagen, durch eine Armstrombegrenzung, die Korrekturwerte für die von der Ermittlungseinheit, umfassend die Armenergieregelung (und gegebenenfalls weiteren Steuerkomponenten), gelieferten Ströme bereitstellt, die Einhaltung der Grenzen dennoch sicherzustellen. Das bedeutet, selbst wenn das Ergebnis der Armenergieregelung und/oder einer weiteren Steuerkomponente, das im hier beschriebenen Verfahren als gegeben angesehen wird, zu einer Überschreitung bzw. Unterschreitung von Grenzen führen würde, kann die hier beschriebene Armstrombegrenzung dem durch Korrektur entgegenwirken. Dabei können der minimale Armstrom und der maximale Armstrom fest vorgegeben werden; bevorzugt ist es im Rahmen der Erfindung jedoch, worauf im Folgenden noch näher eingegangen werden wird, wenn diese vom aktuellen Zustand des Teilumrichters abhängig für jeden Zyklus ermittelt werden und so eine Armenergiebegrenzung (zusätzlich) bereitstellen.

Für die zugrunde liegende Ermittlung, die wenigstens die Armenergieregelung umfasst, kann letztlich jedes im Stand der Technik grundsätzlich bekannte Vorgehen angewendet werden, genau wie für weitere Steuerkomponenten, wie beispielsweise eine zusätzliche Armleistungsregelung, die ebenso Beiträge für einzustellende Armströme liefern kann, und/oder eine Vorsteuerung. Beispielsweise kann das durch die eingangs genannte Dissertation von Daniel Dinkel beschriebene Verfahren eingesetzt werden.

Im Rahmen der vorliegenden Erfindung wurde erkannt, dass eine Begrenzung allein über Korrekturen zu den Strom-Wechselstromkomponenten nicht ausreichend ist. Daher wird vorgeschlagen, Korrekturwerte wenigstens für die Strom-Wechselstromkomponenten und die Strom-Kreisstromkomponenten in einem Optimierungsvorgang zu ermitteln. Es können auch weitere Korrekturwerte in den Korrekturvektor aufgenommen werden, die andere Komponentengrößen betreffen. Ist beispielsweise aufgrund eines angeschlossenen Sternpunkts die Strom-Common-Mode-Komponente nicht gleich Null, kann für diese ein Korrekturwert ermittelt werden; allgemein kann auch ein Korrekturwert für die Strom-Gleichstromkomponente herangezogen werden, was jedoch - je nach Anwendungsfall - zu einem ggf. nicht gewünschten unruhigen Verlauf führen kann.

In Formeln ausgedrückt sei ${I}_{T 0} = \left[\begin{matrix}{I}_{ac 0} \\ {I}_{cc 0}\end{matrix}\right]$ (6) ein sich ergebender transformierter Stromvektor, der aus den Strom-Wechselstromkomponenten und den Strom-Kreisstromkomponenten zusammengesetzt ist. Ferner sei ***I***₀ ein Vektor von Armströmen, der bei diesem transformierten Stromvektor ggf. mindestens eine der zulässigen Grenzen überschreiten, also mindestens einen minimalen Armstrom unterschreiten oder mindestens einen maximalen Armstrom überschreiten, würde. Das Optimierungsproblem ist dann, eine Korrektur der Ströme ${I}_{T} = {I}_{T 0} + λ$ (7) mit dem Korrekturvektor (Lagrangevektor) $λ = \left[\begin{matrix}{λ}_{ac 1} \\ {λ}_{ac 2} \\ {λ}_{cc 1} \\ {λ}_{cc 2}\end{matrix}\right]$ (8) und den Korrekturwerten *λ*_{ac1}, *λ*_{ac2}, *λ*_{cc1}, *λ*_{cc2} so bereitzustellen, dass einerseits ∥***λ***∥ minimal ist und andererseits die Ungleichung ${I}_{min} \left[\begin{matrix}1 \\ 1 \\ 1 \\ 1 \\ 1 \\ 1\end{matrix}\right] \leq {I}_{0} + \frac{1}{2 \sqrt{3}} \left[\begin{matrix}- \sqrt{3} & 1 & - \sqrt{3} & 1 \\ 0 & - 2 & 0 & - 2 \\ \sqrt{3} & 1 & \sqrt{3} & 1 \\ \sqrt{3} & - 1 & - \sqrt{3} & 1 \\ 0 & 2 & 0 & - 2 \\ - \sqrt{3} & - 1 & \sqrt{3} & 1\end{matrix}\right] λ \leq {I}_{max} \left[\begin{matrix}1 \\ 1 \\ 1 \\ 1 \\ 1 \\ 1\end{matrix}\right]$ (9) gilt. Hierin ist *I*ₘᵢₙ der minimale Armstrom, *I*ₘₐₓ der maximale Armstrom. Diese können fest vorgegeben, aber auch situationsspezifisch bestimmt werden, wie bereits erwähnt.

Generell ist es zweckmäßig, wenn der Optimierungsvorgang als quadratisches Programm für den Korrekturvektor formuliert ist. Denn die soeben dargelegten Gleichungen stellen ein Optimierungsproblem mit quadratischer Zielfunktion und linearen Nebenbedingungen dar. In allgemeiner Form kann bei der quadratischen Formulierung geschrieben werden ${{min}_{︸}}_{λ} \left(\frac{1}{2}{λ}^{T}Hλ+{f}^{T}λ\right)$ (10) mit den Nebenbedingungen $A λ \leq b , {A}_{eq} λ = {b}_{eq} , {λ}_{u} \leq λ \leq {λ}_{o} .$ (11)

Dieses Optimierungsproblem ist stets eindeutig lösbar, sofern H positiv definit ist und die Nebenbedingungen widerspruchsfrei sind.

Im vorliegenden Fall wird beispielsweise $H = {E}_{4} , f = {0}_{4} , A = \frac{1}{2 \sqrt{3}} \left[\begin{matrix}- \sqrt{3} & 1 & - \sqrt{3} & 1 \\ 0 & - 2 & 0 & - 2 \\ \sqrt{3} & 1 & \sqrt{3} & 1 \\ \sqrt{3} & - 1 & - \sqrt{3} & 1 \\ 0 & 2 & 0 & - 2 \\ - \sqrt{3} & - 1 & \sqrt{3} & 1 \\ \sqrt{3} & - 1 & \sqrt{3} & - 1 \\ 0 & 2 & 0 & 2 \\ - \sqrt{3} & - 1 & - \sqrt{3} & - 1 \\ - \sqrt{3} & 1 & \sqrt{3} & - 1 \\ 0 & - 2 & 0 & 2 \\ \sqrt{3} & 1 & - \sqrt{3} & - 1\end{matrix}\right] , b = \left[\begin{matrix}{I}_{max} - {I}_{0} \\ {I}_{0} - {I}_{min}\end{matrix}\right] .$ (12) gewählt, wobei *E*₄ die 4x4-Einheitsmatrix ist. Die restlichen Größen der allgemeinen Formulierung werden nicht benötigt. Durch die Einheitsmatrix sind alle zur Begrenzung verwendeten Ströme gleich gewichtet. In einer Ausgestaltung der Erfindung kann jedoch auch vorgesehen sein, dass die Parametrierung des quadratischen Programms zur Realisierung unterschiedlicher Gewichtungen für die Korrekturwerte gewählt ist. Hierzu kann beispielsweise H abweichend von *E*₄ als eine Diagonalmatrix gewählt werden, deren Diagonale die Gewichte enthält.

Zusammenfassend kann man sagen, dass erkannt wurde, dass zur Sicherstellung eines möglichst unterbrechungsfreien Betriebs einer Last, insbesondere eines Elektro-Lichtbogenofens, an den Begrenzungen für die Armströme, gegebenenfalls bestimmt zur Einhaltung der Armenergien, ein gutmütiges Verhalten realisiert werden muss. Ein Abschalten des Multilevelumrichter aufgrund vorübergehender Überlastung würde zu einer Unterbrechung des Betriebs der Last, insbesondere des Elektro-Lichtbogenofens, führen. Eine scharfe Leistungsreduktion führt zum Abreißen des Lichtbogens. Der Lichtbogen muss auch dann, wenn ein Teilumrichter an seine Grenzen gelangt, noch stabil erhalten werden und darf nicht flackern. Entsprechend wird vorgeschlagen, Sollwerte für Armströme, konkret auf Basis der Komponentengrößen, so anzupassen, dass ein Überschreiten der Grenzen möglichst weitgehend verhindert wird. So erhält der Multilevelumrichter ein gutmütiges Verhalten, das es erlaubt, ihn auch an seinen Betriebsgrenzen noch sicher und zuverlässig zu betreiben.

Die beschriebene Armstrombegrenzung wird insbesondere pro Teilumrichter angewendet, um deren Regelungs- und Steuerprozesse voneinander getrennt zu halten. Wie bereits erwähnt, lässt sich das Verfahren besonders vorteilhaft bei einer Anwendung zum Betrieb eines Elektro-Lichtbogenofens als Last einsetzen. Dort umfasst der Multilevelumrichter zwei Teilumrichter, nämlich einen netzseitigen Teilumrichter, der mit einem versorgenden Netz (Versorgungsnetz) verbunden ist, und einen ofenseitigen Teilumrichter, der über einen Ofentransformator mit dem Lichtbogenofen, genauer dessen Elektroden, verbunden ist. Über die verbundenen Gleichspannungsanschlüsse wird ein Gleichspannungs-Zwischenkreis gebildet.

Wie bereits erwähnt, kann in einer besonders vorteilhaften Ausgestaltung der vorliegenden Erfindung vorgesehen sein, dass für eine Energie-Armgröße, die die aktuell in den jeweiligen Armen gespeicherte Armenergie beschreibt, ein Energie-Minimalwert und ein Energie-Maximalwert vorgegeben sind, wobei zur Armenergiebegrenzung der minimale Armstrom und der maximale Armstrom für jeden Zyklus abhängig von einer den aktuellen Armzustand beschreibenden Zustands-Armgröße derart bestimmt wird, dass für einen Vorhersagezeitraum der Energie-Minimalwert nicht überschritten bzw. der Energie-Maximalwert nicht überschritten wird. Mit anderen Worten wird vorgeschlagen, nicht nur vorgegebene Schwellwerte für die Armströme zu berücksichtigen, sondern einen weiteren Schwellwert für jeden Arm zu definieren, der derart beschaffen ist, dass dieser Arm auf jeden Fall noch für einen Vorhersagezeitraum ohne Verletzung des Energie-Minimalwerts und das Energie-Maximalwerts betrieben werden könnte, wenn dieser Grenzstrom in dem Vorhersagezeitraum konstant anliegen würde. Es wird dann als minimaler Armstrom der minimale der jeweiligen Schwellwerte und als maximaler Armstrom der maximale der jeweiligen Schwellwerte festgelegt. Wird für jeden Zyklus eine neue Ermittlung durchgeführt, kann sichergestellt werden, dass die Grenzen für die Armenergie sicher eingehalten werden. Dies ist analog zu einer modellprädiktiven Regelung, bei der der Vorhersagezeitraums den Prognosehorizont beschreibt. Das bedeutet, der maximale Armstrom und der minimale Armstrom verändern sich dynamisch mit der Zeit und es liegen für jeden Arm individuelle Werte vor, die von der momentanen Armenergie abhängig sind. Auf diese Weise wird ein nahendes Überschreiten der Schwellwerte in dem Vorhersagezeitraum verhindert und Sollwerte werden rechtzeitig so angepasst, dass dies vermieden wird.

Der Vorhersagezeitraum kann bevorzugt kleiner als 5 ms, insbesondere kleiner oder gleich 2 ms, sein. Die Vorausabschätzung bezieht sich also auf wenige Millisekunden, was insbesondere bei schwervorhersagbaren Systemen, beispielsweise bei einem Elektro-Lichtbogenofen als Last, zweckmäßig ist. Je kleiner der Vorhersagezeitraum, der auch als Reservezeit bezeichnet werden kann, ist, desto besser wird der zulässige Bereich für die Armenergien ausgenutzt, wobei jedoch auch stärkere Korrekturen bei Annäherung an die Grenzen auftreten.

Dabei sei darauf hingewiesen, dass die Energie-Armgröße nicht zwangsläufig die Armenergie selber sein muss, sondern statt der Armenergie W als Armgröße auch Armladungen oder maximalschaltbare Armspannungen betrachtet werden können. Denn es gilt für jeden Arm: $W = \frac{1}{2} {CV}^{2} = \frac{1}{2} \frac{{Q}^{2}}{C} ,$ (13) wobei C die Gesamtkapazität eines Arms, die sich durch Reihenschaltung aller Speicherkondensatoren eines Arms ergibt, Q die Ladung eines der Kondensatoren (für alle Kondensatoren als gleich angenommen) und V die maximal schaltbare Armspannung, also die Spannung des Arms, wenn alle Kondensatoren eingeschaltet sind, bezeichnet.

In einer ersten konkreten Ausgestaltung kann vorgesehen sein, dass als die Energie-Armgröße eine Armladung und als Zustands-Armgröße ein Aussteuergrad verwendet werden. Das bedeutet, *I*ₘᵢₙ und *I*ₘₐₓ (jetzt als Vektoren mit Werten für jeden Umrichterarm) können konkret folgendermaßen berechnet werden: ${I}_{min} = max \left(-{I}_{max}\left[\begin{matrix}1 \\ 1 \\ 1 \\ 1 \\ 1 \\ 1\end{matrix}\right],\left({q}_{min}\left[\begin{matrix}1 \\ 1 \\ 1 \\ 1 \\ 1 \\ 1\end{matrix}\right]-q\right)/xT\right)$ (14) und ${I}_{max} = min \left({I}_{max}\left[\begin{matrix}1 \\ 1 \\ 1 \\ 1 \\ 1 \\ 1\end{matrix}\right],\left({q}_{max}\left[\begin{matrix}1 \\ 1 \\ 1 \\ 1 \\ 1 \\ 1\end{matrix}\right]-q\right)/xT\right) .$ (15)

In diesen Formeln ist dabei die mit einem Schrägstrich dargestellte Vektordivision als komponentenweise Division zu verstehen. Dabei wurde der untere Schwellwert für die Armströme als das negative des oberen Schwellwertes für die Armströme gewählt. Die Bedingungen *I*ₘᵢₙ ≤ 0 und *I*ₘₐₓ ≥ 0 sind automatisch erfüllt, sofern die die Armenergien beschreibenden, als Energie-Armgröße gewählten Armladungen *qᵢ*, die Komponenten von q, zulässige Werte aufweisen, d. h. *q*ₘᵢₙ ≤ *qᵢ* ≤ *q*ₘₐₓ. Obige Formeln stellen für einen momentanen Vektor der Armaussteuerung x mit den Komponenten ${x}_{i} = \frac{{U}_{i}}{{V}_{i}}$ (16) (als Zustands-Armgrößen mit *Vᵢ* als aktuell maximal schaltbare Armspannung) zu einem gegebenen momentanen Armladungsvektor ***q*** sicher, dass der Energie-Minimalwert *q*ₘᵢₙ bzw. der Energie-Maximalwert *q*ₘₐₓ innerhalb des Vorhersagezeitraums der Länge *T* nicht erreicht werden. Sie setzen dabei voraus, dass die Armaussteuerungen innerhalb des Vorhersagezeitraums T näherungsweise konstant bleiben. Es wird weiterhin sichergestellt, dass der Strombetrag in einem Arm den Maximalbetrag (oberen Schwellwert) *I*ₘₐₓ nicht überschreitet, bei dem Bauelemente, insbesondere Halbleiterschalter, möglicherweise nicht mehr sicher abschalten oder thermisch überlastet werden.

In einer alternativen zweiten konkreten Ausgestaltung kann vorgesehen sein, dass als die Energie-Armgröße die Armenergie und als Zustands-Armgröße eine Armspannung verwendet werden. Dann kann also geschrieben werden ${I}_{min} = max \left(-{I}_{max}\left[\begin{matrix}1 \\ 1 \\ 1 \\ 1 \\ 1 \\ 1\end{matrix}\right],\left({w}_{min}\left[\begin{matrix}1 \\ 1 \\ 1 \\ 1 \\ 1 \\ 1\end{matrix}\right]-w\right)/UT\right)$ (17) und ${I}_{max} = min \left({I}_{max}\left[\begin{matrix}1 \\ 1 \\ 1 \\ 1 \\ 1 \\ 1\end{matrix}\right],\left({w}_{max}\left[\begin{matrix}1 \\ 1 \\ 1 \\ 1 \\ 1 \\ 1\end{matrix}\right]-w\right)/UT\right) .$ (18)

Bei diesen Formeln ist leichter abschätzbar, ob und inwieweit von näherungsweise konstant bleibendem Vektor der Armspannungen ***U*** ausgegangen werden kann. Dabei ist auch denkbar, einen Vektor von Schätzwerten für die Armspannungsmittelwerte über das Zeitintervall [*t, t + T*] zu berechnen, wo t den aktuellen Zeitpunkt beschreibt. Mit anderen Worten kann vorgesehen sein, dass die Zustands-Armgröße als Mittelwert eines geschätzten zukünftigen Verlaufs in dem Vorhersagezeitraum ermittelt wird. Der geschätzte zukünftige Verlauf kann beispielsweise wie für modellprädiktive Regelungen bekannt ermittelt werden.

Es sei noch angemerkt, dass bei nicht durch den Optimierungsvorgang realisierter Armenergiebegrenzung auch Ausführungsbeispiele denkbar sind, in denen alle Korrekturwerte gleich gewählt werden. Dies vereinfacht die durchzuführenden Berechnungen und die Formeln deutlich, lässt sich jedoch hinsichtlich der Armenergiebegrenzung, wie Versuche gezeigt haben, nicht sinnvoll einsetzen.

Wenn die Transformation wenigstens orthogonal, insbesondere orthonormal ist, kann für die Armenergieregelung, abweichend von den Vorgehensweisen des Standes der Technik, auch diese Transformation eingesetzt werden. Hierbei kann die Transformation auch auf Armgrößen angewendet werden, die die aktuell in den jeweiligen Umrichterarmen (kurz: Armen) gespeicherte Armenergie beschreiben. Dann kann vorgesehen sein, dass für Energie-Komponentengrößen, die durch Anwendung der Transformation auf eine die Energie in den jeweiligen Armen (Armenergien) beschreibende Energie-Armgröße erhalten werden, jeweils wenigstens ein Sollwert für jede Energie-Komponentengröße bereitgestellt wird,
wobei die Abfolge zur Armenergieregelung folgende Schritte für wenigstens einen des wenigstens einen Teilumrichters aufweist:
- Ermitteln der aktuellen Werte der Energie-Komponentengrößen aus erfassten Zustandsgrößen des Teilumrichters,
- Unabhängige Regelung der Energie-Komponentengrößen auf den zugeordneten Sollwert zur Ermittlung von Regelgrößen, wobei für jede Komponentengröße wenigstens ein Energieregler vorgesehen ist und wenigstens eine Regelgröße wenigstens eines Energiereglers einzustellende Kreisströme beschreibt.

Die Idee ist es in einer solchen Ausgestaltung, auf eine die Armenergie, die aufgrund der Ladungen der Kondensatoren in den einzelnen Armen gespeichert ist und die auf einen Sollwert innerhalb enger Toleranzgrenzen geregelt werden soll, beschreibende Energiegröße als weitere Armgröße die Transformation anzuwenden, so dass entsprechende Energie-Komponentengrößen erhalten werden. Werden für diese Energie-Komponentengrößen Sollwerte vorgegeben, lässt sich aufgrund der bekannten Transformation wiederum für jede Energie-Komponentengröße interpretieren, wo Abweichungen zu hohe und wo zu niedrige Armenergie anzeigen. Aufgrund der Tatsache, dass die Wirkung der entsprechenden Stromkomponenten, hier vornehmlich der Kreisströme, auch bekannt ist, lässt sich formulieren, wie für jede Abweichung korrigierende Strom-Komponentengrößen formuliert werden können.

Dabei ist die Erkenntnis wichtig, dass eine orthonormale, bevorzugte Transformation leistungsinvariant ist und Skalierungsfaktoren vermeidet. Allerdings kann auch erkannt werden, dass im Allgemeinen die Energie-Komponentengrößen, insbesondere bevorzugt für die maximal möglichen Armspannungen, nicht ausschließlich durch die entsprechenden Strom- und Spannungskomponentengrößen bestimmt sind. Daher sind aufgrund der Orthonormalität, bevorzugt Orthogonalität, zwar entkoppelte Energieregler möglich, aber Abweichungen müssen nicht unbedingt durch Ströme und/oder Spannungen derselben Komponente korrigiert werden. Insbesondere bedeutet dies, dass die nach außen nicht sichtbaren Kreisströme - je nachdem, was vorgegeben ist - zur Korrektur der Abweichung in mehreren Gruppen von Komponentengrößen (und nicht nur für die Energie-Kreisstromgrößen) verwendet werden können, was vorteilhaft ausgenutzt wird.

Beispielsweise können basierend auf der Interpretation und/oder anderweitig heuristisch Gleichungen für Strom-Komponentengrößen bzw. deren Änderungen formuliert werden, die multiplikativ die Energie-Komponentengröße bzw. deren Änderung/Abweichung (als Eingangswert eines Reglers), einen Verstärkungsfaktor und eine Gesamtsteuergröße verknüpfen. Die Gesamtsteuergröße kann sich aus armbezogenen, aufsummierten Steuergrößen zusammensetzen, die letztlich eine Art Gewichtung des jeweiligen Arms aufgrund der oben genannten Interpretation derart beschreiben, dass die "Richtung" der Korrektur exakt passend gewählt ist und keine anderen Abweichungen herbeiführt.

Wo und wie durch die Kreisströme korrigiert werden kann und welche Abweichungen von dem Sollwert der Armeenergie-Komponentengrößen anderweitig zu korrigieren sind, kann davon abhängen, was an welchen Anschlüssen des Teilumrichters angeschlossen ist und welche Komponentengrößen des Stroms und der Spannung, insbesondere bezogen auf die Gleichstromkomponente (an den Gleichstromanschlüssen) und die Wechselspannungskomponente(n) (an den Wechselspannungsanschlüssen) und die Common-Mode-Komponente (Sternpunkt angeschlossen oder nicht), von außen bzw. einer anderen Regelungseinheit, insbesondere der Leistungsregelung, festgelegt sind sowie welcher Wertebereich denkbar ist. Dabei ist noch anzumerken, dass bei nicht angeschlossenem Sternpunkt die Strom-Common-Mode-Komponente immer Null ist. Hinsichtlich der Spannungs-Common-Mode-Komponente und deren potentieller Nutzung wird im Folgenden noch genauer ausgeführt.

Konkret kann vorgesehen sein, dass zumindest für die Energieregler der Energie-Gleichstromkomponente und der Energie-Wechselstromkomponente die Regelabweichung über Kreisströme korrigiert wird und/oder für den Energieregler der Energie-Common-Mode-Komponente die wenigstens eine Regelgröße einen Kreisstrom und/oder eine Strom-Komponentengröße gewählt aus der Gruppe der Strom-Gleichstromkomponente und wenigstens einer Strom-Wechselstromkomponente betrifft und/oder für den Energieregler der Gleichstromkomponente die wenigstens eine Regelgröße eine Strom-Komponentengröße gewählt aus der Gruppe der Strom-Gleichstromkomponente und wenigstens einer Strom-Wechselstromkomponente betrifft.

Für den Common-Mode-Regler ist es dabei wichtig zu erkennen, dass eine Common-Mode-Abweichung genau dann nicht über Kreisströme ausgeregelt werden kann, wenn die Spannungs-Wechselstromkomponenten bzw. die Wechselspannungen an den Wechselspannungsanschlüssen gleich Null sind. Dies liegt daran, dass beispielsweise die Summe der positiven Armenergien nicht verändert werden kann, da dann, wenn in dieser Situation ein positiver Arm geladen wird, die anderen beiden positiven Arme entsprechend entladen werden. Dasselbe gilt für die negativen Arme. Gerade dann, wenn die Wechselspannungsanschlüsse mit der Last verbunden sind, kann eine Anforderung für verschwindende Wechselspannungen durchaus auftreten. Bei einer Anordnung von zwei Teilumrichtern (einer netzseitig, einer lastseitig) mit einem Gleichspannungs-Zwischenkreis hat sich nun gezeigt, dass über die mit dem Zwischenkreis-Gleichstrom über einen Faktor zusammenhängende Strom-Gleichstromkomponente zumindest für den lastseitigen Teilumrichter (wo der Fall, dass die Wechselspannungen Null werden sollen, auftreten kann) eine Ausregelung möglich ist. Die Strom-Gleichstromkomponente regelt dann nicht nur die Gesamtenergie, sondern auch die Energie-Common-Mode-Komponente aus. Dies kann insbesondere, wie noch genauer dargelegt werden wird, optional durch geschickte Wahl der Spannungs-Common-Mode-Komponente unterstützt werden. Da aber, auf der anderen Seite, bei hohen angeforderten Wechselspannungen an den Wechselspannungsanschlüssen eine Ausregelung über Kreisströme aufgrund reduzierter Rückwirkung auf den Zwischenkreis zweckmäßiger sein kann, ist es auch denkbar, den Energieregler für die Energie-Common-Mode-Komponente so auszugestalten, dass sowohl Kreisströme als auch ein Gleichstrom ausgegeben werden, oder auch zwischen den Ausgangsgrößen, also Regelgrößen, umzuschalten.

Dies sei am Beispiel der Anwendung bei einem Elektro-Lichtbogenofen genauer erläutert. Bei dem ofenseitigen Teilumrichter ist die Regelgröße (Stellgröße), also die Ausgangsgröße, des Common-Mode-Energiereglers und des Gleichstrom-Energiereglers jeweils der Gleichstrom, also die Strom-Gleichstromkomponente, die leicht in den Zwischenkreisstrom umgerechnet werden kann. Die Ausgangsgrößen der übrigen Energieregler sind jeweils die beiden Kreisströme, also die erste und die zweite Strom-Kreisstromkomponente. Die Spannungs-Gleichstromkomponente (und hierdurch letztlich die Zwischenkreis-Gleichspannung) ist dabei vorgegeben. Auch die Spannungs-Common-Mode-Komponente kann vorgegeben sein. Die beiden ofenseitigen Wechselströme (und mithin die Strom-Wechselstromkomponenten) sind Zustandsgrößen und werden gemessen und die ofenseitigen Wechselspannungen (und somit die Spannungs-Wechselstromkomponenten) sind Sollwerte, die von der überlagerten Ofen-Leistungsregelung geliefert werden.

Bei dem netzseitigen Teilumrichter hat der Common-Mode-Regler Anteile der beiden Strom-Kreisstromkomponenten als Ausgangsgrößen. Der Gleichspannungs-Energieregler muss seine Regelabweichung dagegen über die Wechselspannungsseite ausgleichen. Die netzseitige Wechselspannung ist dabei vom Netz vorgegeben, wird gemessen oder ist anderweitig als Zustandsgröße bekannt. Auch ist ein netzseitiger Leistungsfaktor vorgegeben oder bekannt. Damit sind die Wechselströme und somit die Strom-Wechselstromkomponenten insgesamt klar bestimmt. Die übrigen Energieregler sind gleich ausgestaltet wie beim ofenseitigen Teilumrichter; zudem kann auch hier die Common-Mode-Spannung (Spannungs-Common-Mode-Komponente) vorgegeben sein.

Wie erwähnt, kann eine Common-Mode-Regelabweichung grundsätzlich sowohl über den Gleichstrom als auch über die Kreisströme korrigiert werden, sodass auch gemischte Ausgangsgrößen/Regelgrößen denkbar sind, beispielsweise die Regelgrößen des Common-Mode-Energiereglers sowohl einen Anteil der Strom-Gleichstromkomponente als auch der beiden Strom-Kreisstromkomponenten umfassen können.

Allgemein kann man sagen, dass bei dem mehrere unabhängige Energieregler nutzenden Ansatz auf eine Prognose zukünftiger Ströme bzw. sonstiger (Arm-)Größen verzichtet wird. Stattdessen wird eine Energieregelung verwendet, die allein mit Momentanwerten auskommt und dadurch jederzeit auf Unwägbarkeiten reagieren kann. Hierzu werden die sechs Armenergien eines Teilumrichters betrachtet. Diese sollen beispielsweise alle möglichst nahe an einem zugehörigen Sollwert liegen. Dabei sei darauf hingewiesen, dass die Energie-Armgröße nicht zwangsläufig die Armenergie selbst sein muss, sondern statt der Armenergie W als Armgröße auch Armladungen oder maximalschaltbare Armspannungen betrachtet werden können. Denn es gilt für jeden Arm die Gleichung (13). Vorzugsweise kann die Energie-Armgröße die maximal schaltbare Armspannung sein. Das hat den Vorteil, dass die maximal schaltbaren Armspannungen linear mit den Spannungen und Strömen zusammenhängen, während die Armenergie selbst nichtlinear mit diesen zusammenhängt. Somit stellt ein Arbeiten mit den Armenergien als Armgröße einen schwieriger umsetzbaren Fall dar.

Die zweckmäßigste Festlegung von Sollwerten für die Energie-Komponentengrößen ergibt sich, wenn alle Sollwerte außer dem für die Energie-Gleichstromgröße als Null gewählt werden, wobei der Sollwert der Energie-Gleichstromgröße so gewählt wird, dass sich die korrekte anliegende Gleichspannung an den Gleichspannungsanschlüssen ergibt. Dabei wird ausgenutzt, dass zu den Gleichstrom-Komponenten alle Arme gleich beitragen, vergleiche die vierte Zeile der obigen beispielhaften Matrix ***T*.** Somit kann insbesondere die Energieerhaltung erreicht werden. Für die maximal schaltbaren Armspannungen ergibt sich, wenn die Sollwerte mit einem Dach gekennzeichnet werden: ${\hat{V}}_{dc} = \sqrt{6} {U}_{zk}$ (19) und ${\hat{V}}_{cm} = {\hat{V}}_{ac 1} = {\hat{V}}_{ac 2} = {\hat{V}}_{cc 1} = {\hat{V}}_{cc 2} = 0 .$ (20)

Dabei bezeichnet *U*_{zk} eine am Zwischenkreis gewünschte Gleichspannung.

Um die Energieregler zu realisieren, wird die Abweichung der jeweiligen Komponentengröße von ihrem Sollwert erfasst und dem Energieregler zugeführt. Dabei sei an dieser Stelle angemerkt, dass die grundsätzliche Möglichkeit, Zustandsgrößen zu erfassen und hieraus, insbesondere mittels der Transformation, Ist-Werte für die Komponentengrößen zu ermitteln, im Stand der Technik hinreichend bekannt ist und somit hier nicht näher dargelegt werden muss; dies gilt selbstverständlich auch hinsichtlich der beschriebenen Armleistungsbegrenzung. Auch die Umsetzung von Regelgrößen bzw. aus diesen ermittelten, korrigierten Strom-Komponentengrößen durch letztendliche konkrete Ansteuerung von Schaltern der Submodule ist bekannt, wozu rein beispielhaft auf die bereits genannte Dissertation von Daniel Dinkel verwiesen sei.

Zusammenfassend kann gesagt werden, dass bei dem hier vorgestellten Regelkonzept, welches mehrere unabhängige Energieregler verwendet, kein periodischer Verlauf und keine feste Frequenz angenommen werden muss, sondern die Regelung allein mit Momentanwerten auskommt. Hierbei hat es sich als kein guter Ansatz erwiesen, die mehreren Arme eines Teilumrichters mit einer Mehrgrößenregelung zu behandeln, sondern es ist von großem Vorteil, zunächst in die Komponentengrößen zu transformieren. Die transformierten Komponentengrößen sind zueinander orthogonal, sodass mehrere, insbesondere bei drei Phasen sechs, Einzelregler entstehen, die unabhängig voneinander sind und getrennt voneinander optimal eingestellt werden können. Mit anderen Worten entstehen durch die orthogonale, bevorzugt orthonormale, Zerlegung voneinander entkoppelte Eingrößen-Regelkreise. Diese Regelungsstruktur erlaubt eine einfache Analyse der Regelvorgänge, ist intuitiv zu verstehen und kann bei der Inbetriebsetzung auch flexibel an Anforderungen aus der Praxis angepasst werden.

In konkreter Umsetzung der vorliegenden Erfindung kann vorgesehen sein, dass zur Ermittlung der sich durch eine Regelabweichung von einem jeweiligen Sollwert ergebenden Regelgrößen zumindest für jeden eine Strom-Kreisstrom komponente betreffenden Energieregler die Regelabweichung mit einer Gesamtsteuergröße multipliziert wird, die sich als gemäß der Transformation gewichtete Summe von Steuer-Armgrößen, deren Arme durch die entsprechende Regelgröße beeinflussbar sind, ergibt. Hierbei kann in die Ermittlung der Regelgröße auch ein Verstärkungsfaktor eingehen.

Wie bereits kurz diskutiert wurde, kann hinsichtlich einer Abweichung in der Energie-Gleichstromkomponente, im Beispiel *V*_{dc}, eine Anwendung des Energiesatzes ausreichend sein, um die Regelabweichung eingangsseitig auszuregeln. Mit anderen Worten kann der Energieregler für die Energie-Gleichstromkomponente so betrieben werden, dass dem Teilumrichter eingangsseitig die Leistung zugeführt wird, die ihm ausgangsseitig abgeführt wird. Im Beispiel des ofenseitigen Teilumrichters bei einem Lichtbogenofen kann die Energie-Gleichstromkomponente also über den Zwischenkreisstrom (entsprechend der Strom-Gleichstromkomponente) auf bzw. an den Sollwert gebracht werden.

Für die übrigen Komponentengrößen ist zu überlegen, mit welchen Ansatzfunktionen für die Kreisströme (und bezüglich der Energie-Common-Mode-Komponente ggf. auch des Gleichstroms) eine Regelabweichung am besten korrigiert werden kann.

In der Praxis zeigt sich, dass der Aussteuergrad *x* als Steuer-Armgröße noch nicht ideal geeignet ist, um eine Ausreglung von Abweichungen in allen Komponentengrößen gleichmäßig zu erlauben. Ein Abstellen auf Armenergien selbst statt maximal schaltbare Armspannungen an sich erweist sich als günstiger, wobei jedoch dennoch die maximal schaltbaren Armspannungen als Energie-Komponentengrößen verwendet werden sollten. Dies hängt auch mit einer Abhängigkeit der Größe der Gesamtsteuergrößen von aktuellen Teilumrichterzustand ab, so dass in manchen Zeitabschnitten eine weniger effiziente Ausregelung für einen Teil der Energieregler resultiert.

In diesem Zusammenhang sieht eine besonders bevorzugte Weiterbildung vor, dass als die Steuer-Armgröße eine relative Armspannung, die sich bei Division der Armspannung durch die maximal mögliche Armspannung bei auf Nominalwert geladenen Kondensatoren ergibt, verwendet wird. In Formeln ausgedrückt kann als Steuer-Armgröße also ${x}^{˜} = \frac{U}{{U}_{nom}} ,$ (21) verwendet werden. Die Größe *U*ₙₒₘ ist dabei eine konstante Normierungsgröße. Diese relativen Armspannungen verlaufen über unterschiedliche Teilumrichterzustände andersartig als die Aussteuerungen x der vorangegangenen Abschnitte. Die Größe ***x̃*** korrespondiert mit den den Armen zugeführten Leistungen und nicht mit den den Armen zugeführten Ladungsmengen und hat so damit einen direkten Bezug zu den Armenergien. Vorteilhaft bei diesem Ansatz ist es, dass die Armspannungen vorgegeben und somit bekannt sind. Sie sind damit unabhängig vom jeweiligen Ladungszustand des jeweiligen Arms, denn der Teilumrichter muss unabhängig von seinen Ladezuständen stets die vorgegebene Spannung zur Verfügung stellen. Damit entsprechen auch Armleistungen stets den jeweiligen Vorgaben. Es zeigt sich, dass die Entkopplung der Energieregler auf dieser Grundlage noch besser möglich ist. Bei Verwendung der relativen Armspannungen als Steuer-Armgrößen ergeben sich Eigenschaften, die für den Entwurf eines guten linearen Reglers bei Mehrgrößensystemen wie dem Teilumrichtern erforderlich sind.

Zusammenfassend können so Ermittlungsvorschriften für Regelungsgrößen, insbesondere Anteile von Strom-Komponentengrößen, bereitgestellt werden, die von maximal schaltbaren Armspannungen (insbesondere einem entsprechenden gleitenden Mittelwert) ausgehen. Die maximal schaltbaren Armspannungen als Energie-Armgrößen bzw. Energie-Komponentengrößen korrespondieren direkt mit den Armenergien, verhalten sich aber nicht quadratisch, sondern linear, was für eine Regelung leichter zu beherrschen ist. Dazu werden Gesamtsteuergrößen bzw. Steuer-Armgrößen verwendet, die direkt mit den vorgegebenen Spannungen korrespondieren. Kreisströme sowie ggf. wenigstens eine weitere Strom-Komponentengröße werden so berechnet, dass die Energieregler vollständig entkoppelt sind. Das Streckenverhalten ist dabei integral mit einer zusätzlichen Totzeit, die zur Hälfte auf der erwähnten Mittelwertbildung und zur anderen Hälfte auf der Steuerheuristik beruht, welche für den Teilumrichter jeweils günstige Bedingungen zum Aufschalten eines geeigneten Kreisstroms abwarten muss. Am Ende können alle Einzelbeiträge (Regelungsgrößen als Anteile von Stromkomponenten) zu entsprechenden Gesamtströmen, insbesondere Gesamtkreisströmen addiert werden, die allein oder ggf. unter Berücksichtigung weiterer Anteile die Strom-Komponentengrößen bilden, die zur Regelung eingesetzt werden sollen.

Die Energieregler können als P-Regler oder als Pl-Regler ausgeführt sein. Mit besonderem Vorteil werden Smith-Prädiktoren verwendet, die bei totzeitbehafteten Regelstrecken besonders zweckmäßig eingesetzt werden können.

Die gleichartigen Regelgrößen/Ausgangsgrößen der Energieregler werden, um die schlussendliche Armenergieregelung bereitzustellen, für jeden Teilumrichter addiert. Somit sind bezüglich der Armenergieregelung einzustellende Momentanwerte für die Kreisströme sowie den Gleichstrom und/oder die Wechselströme bekannt, die zu den Sollwerten beitragen, welche mittels der Armstrombegrenzung angepasst werden können.

Vorzugsweise kann in einer Armleistungsminimierungsfunktion zur Minimierung der in einer Zykluszeit den Armen zugeführten Leistungen wenigstens eine einen weiteren einzustellenden Kreisstrom beschreibende Minimierungsgröße ermittelt werden, die zu den den einzustellenden Kreisstrom beschreibenden Regelgrößen addiert wird. Bevorzugt werden weitere Strom-Kreisstromkomponenten bzw. Änderungen, also Anteile, diesbezüglich ermittelt. Die Armleistungsminimierungsfunktion minimiert also in jedem Zeitzyklus die den Armen zugeführte elektrische Leistung. Die Aufgabe der Armleistungsminimierungsfunktion ist es, die Schwankungen der Armenergien durch Minimierung der ausgetauschten Leistung eines jeden Armes infolge der Wechselstromflüsse der jeweiligen Teilumrichter als solche zu minimieren. Die Ausgangsgrößen der Armleistungsminimierungsfunktion sind Minimierungsgrößen, die weitere einzustellende Kreisströme des jeweiligen Teilumrichters beschreiben und die zu den ersten einzustellenden Kreisströmen, die durch die Energieregler ermittelt worden, addiert werden.

Neben dem Verfahren betrifft die vorliegende Erfindung auch eine Steuereinrichtung für einen Multilevelumrichter, der wenigstens einen Teilumrichter mit einer Mehrzahl von Umrichterarmen aufweist, die Gleichspannungsanschlüsse des Teilumrichters mit mehreren, insbesondere drei, jeweils einer Phase zugeordneten Wechselspannungsanschlüssen des Teilumrichters verbinden und jeweils mehrere Submodule mit einem Kondensator und ansteuerbaren Schaltern aufweisen, wobei die Steuereinrichtung eingerichtet ist, ein erfindungsgemäßes Verfahren durchzuführen. Im Betrieb führt die Steuereinrichtung mithin das erfindungsgemäße Armstrombegrenzungsverfahren aus. Sämtliche Ausführungen bezüglich des erfindungsgemäßen Verfahrens lassen sich analog auf die erfindungsgemäße Steuereinrichtung übertragen und umgekehrt, so dass auch mit der Steuereinrichtung die genannten Vorteile erhalten werden können. Die Steuereinrichtung kann neben der Bereitstellung der Sollströme auch zu einer übergeordneten Leistungsreglung hinsichtlich einer Last, beispielsweise eines Lichtbogenofens, ausgebildet sein, welche über den Multilevelumrichter an ein Stromnetz bzw. eine Stromquelle angeschlossen ist.

Die Steuereinrichtung kann wenigstens einen Prozessor und wenigstens ein Speichermittel umfassen. Durch Hardware und/oder Software können Funktionseinheiten gebildet sein, um Schritte des erfindungsgemäßen Verfahrens durchzuführen bzw. entsprechend der obigen Beschreibung einen Armstrombegrenzer zu bilden. Beispielsweise können in dem Speichermittel die Transformation und die Schwellwerte für die Armströme bereitgestellt werden, wobei eine Erfassungseinheit aktuelle Zustandsgrößen ermitteln kann und eine Ermittlungseinheit, die mindestens eine Armenergieregelung realisiert, Sollwerte für Ströme, insbesondere in Strom-Komponentengrößen, daraus ermitteln kann. Zur konkreten Umsetzung der Erfassungseinheit und der Ermittlungseinheit geeignete Vorgehensweisen und Funktionseinheiten sind im Stand der Technik bereits bekannt und können auch im Rahmen der vorliegenden Erfindung eingesetzt werden. Die Steuereinrichtung kann ferner eine Armstrombegrenzungseinheit umfassen, die die Korrekturwerte in dem Optimierungsvorgang ermittelt und anwendet.

Ein erfindungsgemäßes Computerprogramm ist direkt in ein Speichermittel einer Steuereinrichtung für einen Multilevelumrichter ladbar und weist Programmmittel derart auf, dass bei Ausführung des Computerprogramms in der Steuereinrichtung diese veranlasst wird, die Schritte eines erfindungsgemäßen Verfahrens durchzuführen. Das Computerprogramm kann auf einem elektronisch lesbaren Datenträger gespeichert sein, welcher mithin darauf gespeicherte Steuerinformation umfasst, die wenigstens ein erfindungsgemäßes Computerprogramm umfassen und derart ausgestaltet sind, dass bei Verwendung des Datenträgers in einer Steuereinrichtung für einen Multilevelumrichter die Steuereinrichtung eingerichtet wird, ein erfindungsgemäßes Verfahren durchzuführen.

Ein erfindungsgemäßer Multilevelumrichter weist wenigstens einen Teilumrichter mit einer Mehrzahl von Umrichterarmen auf, die Gleichspannungsanschlüsse des Teilumrichters mit mehreren, insbesondere drei, jeweils einer Phase zugeordneten Wechselspannungsanschlüssen des Teilumrichters verbinden und jeweils mehrere Submodule mit einem Kondensator und ansteuerbaren Schaltern aufweisen, wobei der Multilevelumrichter eine erfindungsgemäße Steuereinrichtung aufweist, die dessen Betrieb steuert.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- Fig 1: einen Lichtbogenofen und dessen Energieversorgung,
- Fig. 2: einen Arm eines Multilevelumrichters,
- Fig. 3: ein Submodul,
- Fig. 4: ein weiteres Submodul,
- Fig. 5: einen Ablaufplan eines Ausführungsbeispiels des erfindungsgemäßen Verfahrens, und
- Fig. 6: den funktionalen Aufbau einer erfindungsgemäßen Steuereinrichtung.

### Beschreibung der Ausführungsformen

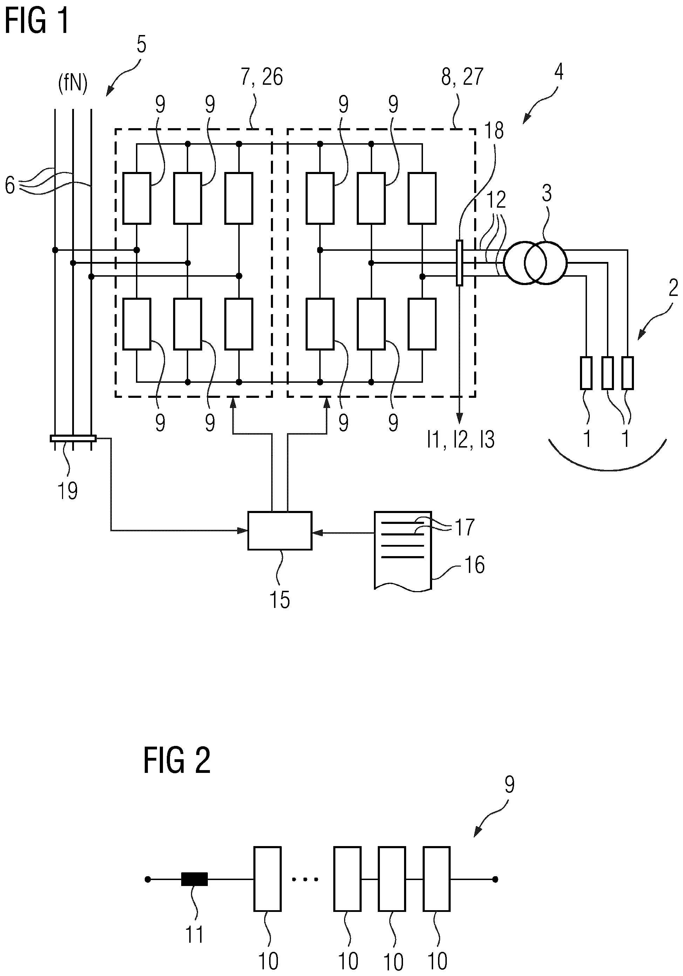

Fig. 1 zeigt schematisch einen Drehstrom-Lichtbogenofen 2 und dessen Energieversorgung. Elektroden 1 des Drehstrom-Lichtbogenofens 2 werden über einen Ofentransformator 3 von einem Multilevelumrichter 4 mit elektrischer Energie versorgt. Der Lichtbogenofen 2 kann von beliebiger Art sein. Es kann sich um einen Lichtbogenofen 2 im engeren Sinne (EAF = electric arc furnace) handeln. Es kann sich aber auch um einen sogenannten SAF (= submerged arc furnace) oder um einen SMELTER handeln. In dem Lichtbogenofen 2 kann nach Bedarf Eisen, Stahl, Aluminium oder auch ein anderes Metall geschmolzen werden.

Der Multilevelumrichter 4 wird seinerseits in aller Regel aus einem Versorgungsnetz 5 mit mehreren eingangsseitigen Phasen 6 (in der Regel drei Phasen 6) mit elektrischer Energie versorgt. Das Versorgungsnetz 5 kann beispielsweise ein Mittelspannungsnetz mit einer Nennspannung von 11 kV, 30 kV, 33 kV oder - in Einzelfällen - von 110 kV sein. Das Versorgungsnetz 5 wird mit einer Netzfrequenz fN betrieben. Die Netzfrequenz fN liegt in der Regel bei 50 Hz oder 60 Hz.

Der Multilevelumrichter 4 ist zwischen dem Versorgungsnetz 5 und dem Ofentransformator 3 angeordnet, der Ofentransformator 3 zwischen dem Multilevelumrichter 4 und den Elektroden 1. Die elektrische Energie fließt somit vom Versorgungsnetz 5 zum Multilevelumrichter 4, von dort weiter zum Ofentransformator 3 und von dort schließlich zu den Elektroden 1.

Konkret in der Ausgestaltung von Fig. 1 ist der Multilevelumrichter 4 als Zwischenkreisumrichter ausgebildet, der zum Versorgungsnetz 5 hin einen eingangsseitigen Gleichrichter 7 als ersten, netzseitigen Teilumrichter 26 und zum Ofentransformator 3 hin einen ausgangsseitigen Wechselrichter 8 als zweiten, ofenseitigen Teilumrichter 27 aufweist. Der Gleichrichter 7 und der Wechselrichter 8 sind über einen Gleichspannungskreis miteinander verbunden.

Multilevelumrichter sind Fachleuten allgemein bekannt. Multilevelumrichter weisen - siehe auch Fig. 2 - Umrichterarme 9 auf. Von den Armen 9 sind in Fig. 1 exemplarisch nur einige wenige mit ihrem Bezugszeichen versehen.

Die Arme 9 bestehen gemäß Fig. 2 ihrerseits aus einer mehrstufigen Reihenschaltung von Submodulen 10. In der Regel sind pro Arm 9 acht oder mehr derartiger Submodule 10 vorhanden. Die Submodule 10 sind untereinander gleich aufgebaut. In der Regel befindet sich am Ende der Reihenschaltung weiterhin eine Drossel 11. Die Drossel 11 befindet sich bei einem Arm 9 des Gleichrichters 7 meist an dem einer eingangsseitigen Phase 6 zugewandten Ende des jeweiligen Armes 9. In analoger Weise befindet sich die Drossel 11 bei einem Arm 9 des Wechselrichters 8 an dem einer ausgangsseitigen Phase 12 (siehe Fig. 1) zugewandten Ende des jeweiligen Armes 9.

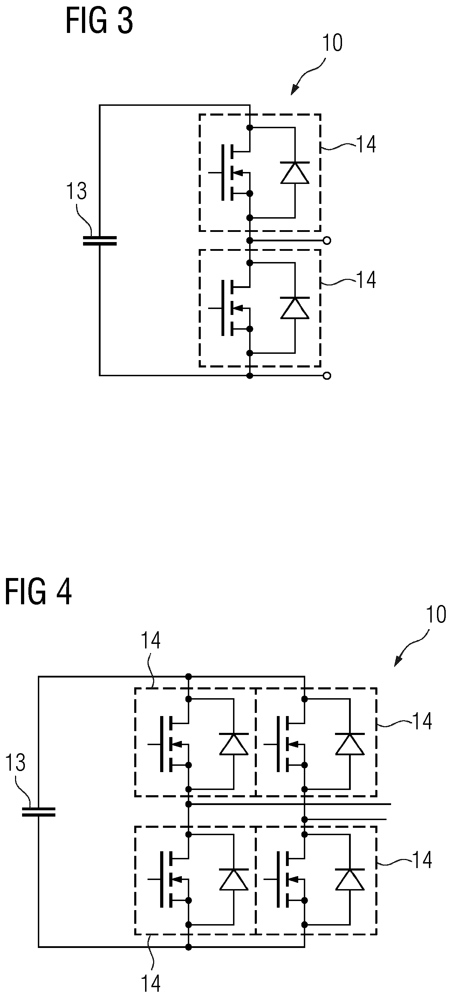

Gemäß Fig. 3 umfasst jedes Submodul 10 einen Speicherkondensator 13 und selbstgeführte Halbleiterschalter 14, die hier als Einheit aus einem Feldeffekttransistor und einer Diode gezeigt sind. Der Begriff "selbstgeführt" bedeutet, dass die Halbleiterschalter 14 durch den Halbleiterschaltern 14 von außen zugeführte Steuersignale sowohl zuschaltbar als auch abschaltbar sind. Beispielsweise können die selbstgeführten Halbleiterschalter 14 auch als IGBTs ausgebildet sein. Der Begriff "selbstgeführt" steht im Gegensatz zum Begriff "netzgeführt". Dieser Begriff bedeutet, dass der jeweilige Halbleiterschalter zwar gezielt zugeschaltet werden kann, jedoch nicht durch ein externes Steuersignal abgeschaltet werden kann. Ein Beispiel für einen netzgeführten Halbleiterschalter ist ein "normaler" Thyristor.

Gemäß Fig. 3 weisen die Submodule 10 jeweils einen einzigen Speicherkondensator 13 und genau zwei Halbleiterschalter 14 auf. Diese Konfiguration ist die Minimalkonfiguration der Submodule 10. Alternativ könnten die Submodule 10 gemäß der Darstellung von Fig. 4 beispielsweise einen Speicherkondensator 13 und vier Halbleiterschalter 14 in Brückenschaltung aufweisen. Auch könnten die Submodule 10 mehrere einzeln schaltbare Speicherkondensatoren 13 aufweisen. In diesem Fall müssen pro eigenständig schaltbarem Speicherkondensator 13 mindestens zwei Halbleiterschalter 14 vorhanden sein.

Die Halbleiterschalter 14 jedes Submoduls 10 sind unabhängig von den Halbleiterschaltern 14 der anderen Submodule 10 schaltbar. Dies gilt unabhängig davon, ob die anderen Submodule 10 im selben oder in einem anderen Arm des Teilumrichters 26, 27 angeordnet sind wie das betreffende Submodul 10. Je nach Schaltzustand der Halbleiterschalter 14 des jeweiligen Submoduls 10 ist der Speicherkondensator 13 des jeweiligen Submoduls 10 alternativ überbrückt oder aktiv. Wenn der in Fig. 3 obere Halbleiterschalter 14 eines Submoduls 10 geschlossen ist und der andere Halbleiterschalter 14 geöffnet ist, ist der Speicherkondensator 13 des jeweiligen Submoduls 10 aktiv. Wenn umgekehrt der in Fig. 3 obere Halbleiterschalter 14 geöffnet ist und der untere Halbleiterschalter 14 geschlossen ist, ist der Speicherkondensator 13 des jeweiligen Submoduls 10 überbrückt. Wenn der Speicherkondensator 13 aktiv ist, trägt die über dem Speicherkondensator 13 abfallende Armspannung zur resultierenden Spannung des jeweiligen Armes 9 bei. Ein in dem jeweiligen Arm 9 fließender Armstrom bewirkt - je nach Richtung des in dem Arm 9 fließenden Armstromes und je nach Ladungszustand des Speicherkondensators 13 - ein Laden oder ein Entladen des Speicherkondensators 13. Wenn der Speicherkondensator 13 hingegen überbrückt ist, trägt die über dem Speicherkondensator 13 abfallende Spannung nicht zur resultierenden Armspannung des jeweiligen Armes 9 bei. Ein in dem jeweiligen Arm 9 fließender Armstrom bewirkt weder ein Laden noch ein Entladen des Speicherkondensators 13.

In analoger Weise ist auch der Speicherkondensator 13 des Submoduls 10 von Fig. 4 je nach Ansteuerzustand der Halbleiterschalter 14 aktiv oder überbrückt. Im Falle der Ausgestaltung von Fig. 4 existiert jedoch ein weiterer Schaltzustand, bei dem die über dem Speicherkondensator 13 abfallende Spannung mit inverser Polung zur resultierenden Armspannung des jeweiligen Armes 9 beiträgt.

Der Multilevelumrichter 4 wird gemäß Fig. 1 von einer Steuereinrichtung 15 gesteuert. Mittels der Steuereinrichtung 15 erfolgt insbesondere die Ansteuerung der Halbleiterschalter 14 der Submodule 10. Die Art und Weise, wie die Halbleiterschalter 14 der Submodule 10 gemäß ermittelter Vorgaben angesteuert werden, ist Fachleuten bekannt.

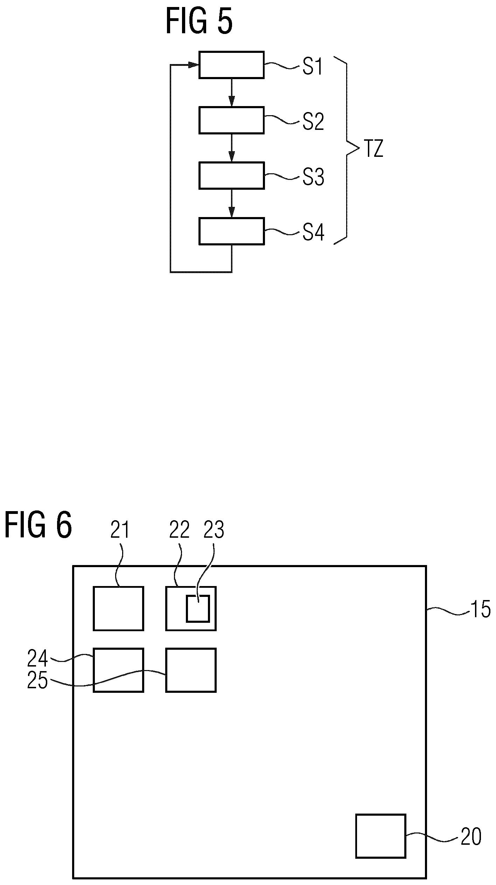

Die Steuereinrichtung 15 ist mit einem Computerprogramm 16 programmiert. Das Computerprogramm 16 umfasst Maschinencode 17, der von der Steuereinrichtung 15 unmittelbar abarbeitbar ist. Die Programmierung der Steuereinrichtung 15 mit dem Computerprogramm 16 bzw. - im Ergebnis gleichbedeutend - die Abarbeitung des Maschinencodes 17 durch die Steuereinrichtung 15 bewirkt, dass die Steuereinrichtung 15 ein erfindungsgemäßes Verfahren ausführt, das nachstehend in Verbindung mit Fig. 5 näher erläutert wird.

Die Steuereinrichtung 15 führt zur Ermittlung von einzustellenden Armströmen bzw. allgemein bei der Steuerung bei einer Betriebsphase die im Ablaufplan der Fig. 5 gezeigten Schritte aus. Dabei ist nur eine Abfolge gezeigt, deren Schritte der Ermittlung der einzustellenden Armströme dienen bzw. mit dieser in Verbindung stehen. Diese Schritte werden zyklisch immer wiederholt. Die Ausführung erfolgt mit einer Zykluszeit TZ, die beispielsweise 2ms oder weniger betragen kann, bevorzugt 1 ms oder weniger. Die Ermittlung der einzustellenden Armströme erfolgt für beide Teilumrichter 26, 27 weitestgehend separat.

Dabei wird von den im allgemeinen Teil bereits diskutierten Formeln ausgegangen, die hier nicht nochmals komplett wiederholt werden sollen und von der orthonormalen Transformation ***T*** ausgehen, um zwischen Armgrößen, hier Armströmen, und Komponentengrößen, hier Strom-Komponentengrößen, umzurechnen.

In einem Schritt S1 werden auf grundsätzlich bekannte Weise Zustandsgrößen und Sollwerte erfasst. Konkret werden beispielsweise Sollwerte für die Spannungs-Wechselstromkomponenten *U*_{ac1} und *U*_{ac2} von einer übergeordneten Ofenregelung bereitgestellt. Zustandsgrößen sind die sich nicht schnell ändernden Strom-Wechselstromkomponenten *I*_{ac1} und *I*_{ac2}, des Wechselrichters 8, die beispielsweise über geeignete Messmittel 18 (vergleiche Fig. 1) erfasst werden können. Auch eine Ermittlung mittels Simulation und/oder eine Kombination dieser Ermittlungswege ist denkbar. Analog können AC-Größen des Versorgungsnetzes 5 mittels Messmitteln 19 ermittelt werden oder anderweitig bekannt sein.

In einem Schritt S2 werden - unter Nutzung wenigstens eines Teils der ermittelten Zustandsgrößen und Sollwerte - Sollwerte für Ströme ermittelt, die den einzustellenden Armströmen zugrunde liegen sollen. Diese Sollwerte, die vorliegend zumindest für die Strom-Wechselstromkomponenten und die Strom-Kreisstromkomponenten bereitgestellt werden, idealerweise auch für die Strom-Gleichstromkomponente (die Strom-Common-Mode-Komponente ist aufgrund des nicht angeschlossenen Sternpunkts Null), werden zumindest teilweise durch eine Armenergieregelung vorgegeben, wobei vorliegend auch eine Vorsteuerung (zur Ermittlung eines Vorsteuerwerts zumindest für die Strom-Gleichstromkomponente) und/oder eine Armleistungsminimierung, die ebenso Beiträge zu den Sollwerten der Strom-Kreisstromkomponenten liefern kann, durchgeführt werden können. Ausgangsgrößen der wie im Stand der Technik grundsätzlich bekannt durchführbaren Ermittlung im Schritt S2 sind vorliegend Sollwerte für die Strom-Kreisstromkomponenten, die Strom-Gleichstromkomponente sowie für die Strom-Wechselstromkomponenten.

Es ist jedoch auch möglich, für die Armenergieregelung, abweichend von den Vorgehensweisen des Standes der Technik, auch die orthonormale Transformation ***T*** einzusetzen. Dies sei im folgenden Abschnitt kurz erläutert, wobei mehrere unabhängige Energieregler realisiert werden, wie oben bereits beschrieben.

Aus den Zustandsgrößen werden die aktuellen Energie-Komponentengrößen bestimmt. Für alle Energie-Komponentengrößen außer der Energie-Gleichstromkomponente *V*_{dc} entsprechen diese bereits der Abweichung vom Soll (Null), für die Energie-Gleichstromkomponente kann die Abweichung mit dem oben genannten Sollwert ermittelt werden. Auch Steuer-Armgrößen werden berechnet, vorliegend relative Armspannungen gemäß Gleichung (21).

Die Sollabweichungen werden dann jeweils einzelnen Energiereglern für jede Energie-Komponentengröße zugeführt, also im vorliegenden Fall sechs Energiereglern für jeden Teilumrichter 26, 27, nämlich einem CM-Energieregler, einem DC-Energieregler, einem AC1-Energieregler, einem AC2-Energieregler, einem CC1-Energieregler und einem CC2-Energieregler, die unabhängig voneinander als Ausgangsgrößen und somit Regelgrößen Strom-Komponentengrößen, bzw. konkret Anteile dieser, liefern, die zur Ausregelung eventuell bestehender Regelabweichungen beitragen. Für den netzseitigen Teilumrichter 26 (Gleichrichter 7) liefern:
- die AC-Energieregler, der CM-Energieregler und der CC-Energieregler Kreisströme, und
- der DC-Energieregler AC-Ströme,
und für den ofenseitigen Teilumrichter 27 (Wechselrichter 8) liefern:
- die AC-Energieregler und die CC-Energieregler Kreisströme, und
- der CM-Energieregler und der DC-Energieregler Gleichströme.

Die Gleichströme, Wechselströme und Kreisströme sind hierbei Anteile entsprechender Strom-Komponentengrößen, wobei gleichartige Ausgangsgrößen addiert werden können, um diese Strom-Komponentengrößen zu ermitteln. Die Energieregler können als P-Regler oder Pl-Regler ausgeführt sein und sind insbesondere als Smith-Prädiktoren ausgebildet.

In einem Ausführungsbeispiel können die DC-Energieregler der beiden Teilumrichter 26, 27 auch zu einem gemeinsamen Regler zusammengefasst sein, um Leistungsschwankungen auf der Wechselspannungsseite des ofenseitigen Teilumrichters 27 nicht vollumfänglich, sondern nur geglättet, an das Versorgungsnetz 2 weiterzugeben.

Zur Ermittlung der sich durch eine Regelabweichung von einem jeweiligen Sollwert ergebenden Regelgrößen wird für zumindest die Kreisströme ausgebenden Energieregler die Regelabweichung mit einer Gesamtsteuergröße multipliziert wird, die sich als gemäß der Transformation gewichtete Summe von Steuer-Armgrößen, deren Arme durch die entsprechende Regelgröße beeinflussbar sind, ergibt.

Dies sei konkret anhand des ofenseitigen Teilumrichters 27 (Wechselrichter 8) nochmals genauer erläutert.

Für die AC1-Komponente *V̅*_{ac1} wird mit ${V}_{ac 1} = 0.5 {\left[-1 0 1 1 0 -1\right]}^{T} V$ angesetzt: $\begin{matrix}d {I}_{cc 1}^{ac 1} = {k}_{ac 1} \left(-{{x}^{˜}}_{p 1}+{{x}^{˜}}_{n 1}-{{x}^{˜}}_{p 3}+{{x}^{˜}}_{n 3}\right) d {\overline{V}}_{ac 1} \\ d {I}_{cc 2}^{ac 1} = 0 .\end{matrix}$

Entsprechend wird für die AC2-Komponente *V̅*_{ac2} mit ${V}_{ac 2} = \frac{1}{\sqrt{3}} {\left[0.5 -1 0.5 -0.5 1 -0.5\right]}^{T} {V}_{ac 2}$ angesetzt: $\begin{matrix}d {I}_{cc 1}^{ac 2} = \frac{1}{2 \sqrt{3}} {k}_{ac 2} \left({{x}^{˜}}_{p 1}-{{x}^{˜}}_{n 1}-{{x}^{˜}}_{p 3}+{{x}^{˜}}_{n 3}\right) d {\overline{V}}_{ac 2} \\ d {I}_{cc 2}^{ac 2} = {k}_{ac 2} \frac{1}{\sqrt{3}} \left(-{{x}^{˜}}_{p 1}+{{x}^{˜}}_{n 1}-2{{x}^{˜}}_{p 2}+2{{x}^{˜}}_{n 2}-{{x}^{˜}}_{p 3}+{{x}^{˜}}_{n 3}\right) d {\overline{V}}_{ac 2} .\end{matrix}$

Für die DC-Komponente *V̅*_{dc} gilt: ${V}_{dc} = \frac{1}{\sqrt{6}} \left[1 1 1 1 1 1\right] {V}_{dc}$ und somit erfolgt die Ausregelung nicht über Kreisströme, $d {I}_{cc 1}^{dc} = d {I}_{cc 2}^{dc} = 0$ sondern hier $d {I}_{dc} = - {{k}^{˜}}_{dc} \left({{x}^{˜}}_{p 1}+{{x}^{˜}}_{n 1}+{{x}^{˜}}_{p 2}+{{x}^{˜}}_{n 2}+{{x}^{˜}}_{p 3}+{{x}^{˜}}_{n 3}\right) d {\overline{V}}_{dc} = - {k}_{dc} d {\overline{V}}_{dc} .$

Für die erste Kreiskomponente *V̅*_{cc1} ist ${V}_{cc 1} = \frac{1}{2} {\left[-1 0 1 -1 0 1\right]}^{T} {V}_{cc 1}$ und somit wird angesetzt $\begin{matrix}d {I}_{cc 1}^{cc 1} = - {{k}^{˜}}_{cc 1} \left({{x}^{˜}}_{p 1}+{{x}^{˜}}_{n 1}+{{x}^{˜}}_{p 3}+{{x}^{˜}}_{n 3}\right) d {\overline{V}}_{cc 1} \approx - {k}_{cc 1} d {\overline{V}}_{cc 1} \\ d {I}_{cc 2}^{cc 1} = 0 .\end{matrix}$

Entsprechend für die zweite Kreiskomponente *V̅*_{cc2} ${V}_{cc 2} = \frac{1}{\sqrt{3}} {\left[0.5 -1 0.5 0.5 -1 0.5\right]}^{T} {V}_{cc 2}$ und zur Ermittlung der Regelgrößen $\begin{matrix}d {I}_{cc 1}^{cc 2} = 0 \\ d {I}_{cc 2}^{cc 2} = - {{k}^{˜}}_{cc 2} \left(0.5{{x}^{˜}}_{p 1}+0.5{{x}^{˜}}_{n 1}+{{x}^{˜}}_{p 2}+{{x}^{˜}}_{n 2}+0.5{{x}^{˜}}_{p 3}+0.5{{x}^{˜}}_{n 3}\right) d {\overline{V}}_{cc 2} \approx - {k}_{cc 2} d {\overline{V}}_{cc 2} .\end{matrix}$

Die Common-Mode-Komponente soll ofenseitig über einen Gleichstrom ausgeregelt werden. Es gilt ${V}_{cm} = \frac{1}{\sqrt{6}} {\left[-1 -1 -1 1 1 1\right]}^{T} {V}_{cm ,}$ so dass $d {I}_{dc}^{cm} = {{k}^{˜}}_{cm} \left({{x}^{˜}}_{p 1}-{{x}^{˜}}_{n 1}+{{x}^{˜}}_{p 2}-{{x}^{˜}}_{n 2}+{{x}^{˜}}_{p 3}-{{x}^{˜}}_{n 3}\right) d {V}_{cm}$ angesetzt werden kann. Die Klammerausdrücke sind dabei jeweils die Gesamtsteuergrößen.

Zusätzlich kann eine Armleistungsminimierung durchgeführt werden. Dort wird die den Armen 9 zugeführte elektrische Leistung minimiert. So sollen die Schwankungen der Armenergien durch Minimierung der ausgetauschten Leistung eines jeden Armes 9 infolge der Wechselstromflüsse der jeweiligen Teilumrichter 26, 27 minimiert werden. Die Ausgangsgrößen des Armleistungsminimierers bzw. einer entsprechend angewandten Armleistungsminimierungsfunktion, die eine Zielfunktion, wie oben bereits diskutiert, minimiert, sind wiederum Kreisströme, also Anteile für die Strom-Kreisstromkomponenten.

Zurückkehrend zur allgemeinen Diskussion der Fig. 2 liegen, unabhängig von der konkreten Umsetzung des Schrittes S2, mithin Sollwerte vor, für die allerdings nicht sichergestellt ist, dass für die einzelnen Arme 10 die Grenzen für die Armströme (thermische Belastbarkeit und sicherer Betrieb insbesondere der Halbleiterschalter 14) und die Armenergien (Überladung von Speicherkondensatoren 13 bzw. Bereitstellung zu niedriger Armspannung) eingehalten werden.

Daher erfolgt in einem Schritt S3 nun eine Korrektur durch eine Armstrombegrenzung. Hierzu werden (unter Verwendung der in Schritt S1 ermittelten Zustandsgrößen bzw. Sollspannungen) zunächst die für den aktuellen Zyklus zu verwendenden, armspezifischen minimalen und maximalen Armströme gemäß den Formeln (17) und (18) bestimmt. Das bedeutet, als die Energie-Armgröße wird die Armenergie und als Zustands-Armgröße die Armspannung verwendet. Für die Armspannung erfolgt dabei vorzugsweise eine Mittelwertbildung eines prädizierten Verlaufs für den Zeitraum [*t, t+ T*], insbesondere nach Art einer Modellprädiktion. Die Länge des Vorhersagezeitraums kann beispielsweise *T* = 4 ms oder *T* = 2 ms betragen und/oder, anders gesagt, das 10 bis 30fache der Zykluszeit, die beispielsweise bei 200 µs liegen kann, sein. Alternativ, aber weniger bevorzugt, kann die Ermittlung der Armspannungen auch gemäß den Formeln (14) und (15) erfolgen.

Basierend hierauf erfolgt jetzt ein Optimierungsvorgang in der Formulierung als quadratische Formulierung gemäß den Formeln (6) bis (12). Ergebnis sind Korrekturwerte, die zu den Sollwerten gemäß (7) addiert werden, um die einzustellenden Armströme festzulegen.

Diese werden dann, wie die anderen Sollwerte der Regelung bzw. Steuerung, in einem Schritt S4 eingestellt. Sie werden einer unterlagerten Steuerlogik zugeführt, die den Multilevelumrichter 4 entsprechend ansteuert. Entsprechende Vorgehensweisen sind Fachleuten bekannt und brauchen hier nicht näher dargelegt werden.

Fig. 6 zeigt schließlich schematisch einen möglichen funktionalen Aufbau der Steuereinrichtung 15. Diese umfasst zunächst ein Speichermittel 20, in dem die Transformation, Schwellwerte und dergleichen bereitgestellt werden können, genau die verschiedene Ermittlungszusammenhänge.

Die folgenden Einheiten sind dabei vorliegend der Einfachheit halber nur für einen Teilumrichter 26, 27 gezeigt.

Eine Erfassungseinheit 21 kann aktuelle Zustandsgrößen gemäß Schritt S1 ermitteln und wenigstens eine Ermittlungseinheit 22 kann die Sollwerte, wie beschrieben, bereitstellen (Schritt S2). Die Ermittlungseinheit kann diesbezüglich Subeinheiten aufweisen, wobei rein beispielshaft eine Subeinheit 23 für die Armenergieregelung, die beispielsweise die sechs Energieregler umfassen kann, gezeigt ist. In einer Armstrombegrenzungseinheit 24 erfolgt gemäß Schritt S3 dann die Korrektur von Strömen. Die Steuereinheit 25 setzt die verschiedenen ermittelten Ausgangsgrößen dann gemäß Schritt S4 um.

Die Steuereinrichtung 15 kann selbstverständlich auch weitere Funktionseinheiten umfassen und beispielsweise auch den bereits erwähnten Ofenregler und dergleichen weitere Funktionalitäten bereitstellen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Elektroden
- 2: Lichtbogenofen
- 3: Ofentransformator
- 4: Multilevelumrichter
- 5: Versorgungsnetz
- 6: eingangsseitige Phasen
- 7: Gleichrichter
- 8: Wechselrichter
- 9: Arme
- 10: Submodule
- 11: Drosseln
- 12: ausgangsseitige Phasen
- 13: Speicherkondensatoren
- 14: Halbleiterschalter
- 15: Steuereinrichtung
- 16: Computerprogramm
- 17: Maschinencode
- 18, 19: Messmittel
- 20: Speichermittel
- 21: Erfassungseinheit
- 22: Ermittlungseinheit
- 23: Subeinheit
- 24: Armstrombegrenzungseinheit
- 25: Steuereinheit
- 26: Teilumrichter
- 27: Teilumrichter
- S1-S4: Schritte
- fN: Netzfrequenz
- TZ: Zykluszeit

## Patentansprüche

1. Verfahren zum Betrieb eines Multilevelumrichters (4), der wenigstens einen Teilumrichter (26, 27) mit einer Mehrzahl von Umrichterarmen (9) aufweist, die Gleichspannungsanschlüsse des Teilumrichters (26, 27) mit mehreren, insbesondere drei, jeweils einer Phase zugeordneten Wechselspannungsanschlüssen des Teilumrichters (26, 27) verbinden und jeweils mehrere Submodule (10) mit einem Kondensator (13) und ansteuerbaren Schaltern (14) aufweisen, wobei eine Transformation derart bereitgestellt wird, dass bei Anwendung auf einen Satz von Armspannungen und/oder einen Satz von Armströmen als Armgrößen folgende Arten von Komponentengrößen erhalten werden:
- eine Gleichstromkomponente, die auf Gleichstromanteile und/oder Gleichspannungsanteile in dem Teilumrichter (26, 27) bezogen ist,
- wenigstens eine Wechselstromkomponente, die auf Wechselstromanteile und/oder Wechselspannungsanteile in dem Teilumrichter (26, 27) bezogen ist,
- eine Common-Mode-Komponente, die auf gemeinsame Ströme und/oder Spannungen in den Armen (10) bezogen ist, und
- wenigstens eine Kreisstromkomponente, die auf nach außen nicht sichtbare Kreisströme und/oder deren Spannungen innerhalb des Teilumrichters (26, 27) bezogen ist,
wobei in einer zyklisch mit einer Zykluszeit (TZ) wiederholten Abfolge von Schritten einzustellende Armströme für die Arme (10) ermittelt werden und ein Schritt der Abfolge die Bereitstellung von Sollwerten für wenigstens einen Teil der Strom-Komponentengrößen und/oder die Armströme durch wenigstens eine Ermittlungseinheit, die wenigstens eine Armenergieregelung durchführt, ist
**dadurch gekennzeichnet, dass** die Abfolge von Schritten zur Sicherstellung einer Einhaltung eines maximalen Armstroms und eines minimalen Armstroms für jeden Arm (10) ferner eine Ermittlung eines minimalen Korrekturvektors mit additiven Korrekturwerten wenigstens für die Strom-Wechselstromkomponenten und die Strom-Kreisstromkomponenten in einem Optimierungsvorgang umfasst und eine Anwendung des ermittelten Korrekturvektors zur Anpassung der Sollwerte umfasst.

2. Verfahren nach Anspruch 1, **dadurch gekennzeichnet, dass** der Optimierungsvorgang als quadratisches Programm für den Korrekturvektor formuliert ist.

3. Verfahren nach Anspruch 1 oder 2, **dadurch gekennzeichnet, dass** für eine Energie-Armgröße, die die aktuell in den jeweiligen Armen gespeicherte Armenergie beschreibt, ein Energie-Minimalwert und ein Energie-Maximalwert vorgegeben sind, wobei zur Armenergiebegrenzung der minimale Armstrom und der maximale Armstrom für jeden Zyklus abhängig von einer den aktuellen Armzustand beschreibenden Zustands-Armgröße derart bestimmt wird, dass für einen Vorhersagezeitraum der Energie-Minimalwert nicht überschritten bzw. der Energie-Maximalwert nicht überschritten wird.

4. Verfahren nach Anspruch 3, **dadurch gekennzeichnet, dass** der Vorhersagezeitraum kleiner als 5 ms, insbesondere kleiner oder gleich 2 ms, ist und/oder dem 10- bis 30-fachen der Zykluszeit entspricht.

5. Verfahren nach Anspruch 3 oder 4, **dadurch gekennzeichnet, dass** als die Energie-Armgröße eine Armladung und als Zustands-Armgröße ein Aussteuergrad verwendet werden.

6. Verfahren nach Anspruch 3 oder 4, **dadurch gekennzeichnet, dass** als die Energie-Armgröße die Armenergie und als Zustands-Armgröße eine Armspannung verwendet werden.

7. Verfahren nach einem der Ansprüche 3 bis 6, **dadurch gekennzeichnet, dass** die Zustands-Armgröße als Mittelwert eines geschätzten zukünftigen Verlaufs in dem Vorhersagezeitraum ermittelt wird.

8. Verfahren nach Anspruch 1 oder 2, **dadurch gekennzeichnet, dass** bei nicht durch den Optimierungsvorgang realisierter Armenergiebegrenzung alle Korrekturwerte gleich gewählt werden.

9. Steuereinrichtung (15) für einen Multilevelumrichter (4), der wenigstens einen Teilumrichter (26, 27) mit einer Mehrzahl von Umrichterarmen (10) aufweist, die Gleichspannungsanschlüsse des Teilumrichters (26, 27) mit mehreren, insbesondere drei, jeweils einer Phase zugeordneten Wechselspannungsanschlüssen des Teilumrichters (26, 27) verbinden und jeweils mehrere Submodule (10) mit einem Kondensator (13) und ansteuerbaren Schaltern (14) aufweisen, wobei die Steuereinrichtung (15) eingerichtet ist, ein Verfahren nach einem der vorangehenden Ansprüche durchzuführen.

10. Computerprogramm (16), welches, wenn es auf einer Steuereinrichtung (15) für einen Multilevelumrichter (4) ausgeführt wird, diese veranlasst, ein Verfahren nach einem der Ansprüche 1 bis 8 durchzuführen.

11. Elektronisch lesbarer Datenträger, auf dem ein Computerprogramm (16) nach Anspruch 10 gespeichert ist.

12. Multilevelumrichter (4), der wenigstens einen Teilumrichter (26, 27) mit einer Mehrzahl von Umrichterarmen (10) aufweist, die Gleichspannungsanschlüsse des Teilumrichters (26, 27) mit mehreren, insbesondere drei, jeweils einer Phase zugeordneten Wechselspannungsanschlüssen des Teilumrichters (26, 27) verbinden und jeweils mehrere Submodule (10) mit einem Kondensator (13) und ansteuerbaren Schaltern (14) aufweisen, wobei der Multilevelumrichter (4) eine Steuereinrichtung (15) nach Anspruch 9 aufweist, die dessen Betrieb steuert.
